# EUROPEAN PATENT APPLICATION

(11) **EP 4 307 750 A1**
(43) Date of publication of application: **17.01.2024**
(21) Application number: 22778423.8
(22) Date of filing: 25.02.2022
(51) Int. Cl.: H04W 16/28

(54) **COMMUNICATION METHOD AND APPARATUS**

(30) Priority: 02.04.2021 CN 202110362384
(71) Applicant: Huawei Technologies Co., Ltd., Longgang Shenzhen, Guangdong 518129 (CN)
(72) Inventor: ZHANG, Lili, Shenzhen, Guangdong 518129 (CN); DAI, Xizeng, Shenzhen, Guangdong 518129 (CN); LIU, Jianghua, Shenzhen, Guangdong 518129 (CN); LOU, Chong, Shenzhen, Guangdong 518129 (CN)
(74) Representative: Isarpatent
(86) International application number: PCT/CN2022/077954
(87) International publication number: WO 2022/206238

(57) **Abstract**

This application relates to the wireless communication field, and discloses a communication method and apparatus, to reduce communication overheads and power consumption of a terminal and a network device. In the communication method, a terminal may send first information to a network device on a first carrier, to trigger measurement on at least one second carrier or at least one beam of at least one second carrier. Subsequently, the terminal may send or receive a reference signal on the at least one second carrier or the at least one beam.

## Description

This application claims priority to Chinese Patent Application No. 202110362384.1, filed with the China National Intellectual Property Administration on April 2, 2021 and entitled "COMMUNICATION METHOD AND APPARATUS", which is incorporated herein by reference in its entirety.

### TECHNICAL FIELD

This application relates to the wireless communication field, and in particular, to a communication method and apparatus.

### BACKGROUND

In a communication system, before a terminal performs data transmission with a network device, the network device usually configures signal measurement configuration information for the terminal. Subsequently, the network device sends a reference signal to the terminal or receives a reference signal from the terminal based on a parameter corresponding to the configuration information, and the terminal device receives or sends the reference signal based on the configuration information, to select a carrier or a beam with good signal quality for data transmission. Especially when the configuration information is for a large quantity of carriers and beams, sending and receiving of the reference signal cause large communication overheads and large power consumption of the terminal and the network device.

### SUMMARY

This application provides a communication method and apparatus, to reduce overheads and power consumption of a terminal and a network device.

To achieve the foregoing objective, the following technical solutions are used in embodiments of this application.

According to a first aspect, an embodiment of this application provides a communication method. The method includes: A terminal sends first information to a network device on a first carrier, and sends or receives a reference signal on at least one second carrier or at least one beam. The first information is used to trigger measurement on the at least one second carrier or the at least one beam of the at least one second carrier.

Based on the method provided in the first method, the terminal may send the first information to the network device on the first carrier, to trigger the measurement on the at least one second carrier or the at least one beam of the at least one second carrier. Subsequently, the terminal may send the reference signal to the network device or receive the reference signal from the network device on the at least one second carrier or the at least one beam. In this manner, sending of reference signals on some carriers or some beams may be triggered based on a requirement. The terminal does not need to receive or send a reference signal on each configured carrier and/or beam or each activated carrier and/or beam, and the network device does not need to send or receive the reference signal on each carrier and/or beam configured for the terminal or each activated carrier and/or beam. This can reduce communication overheads and power consumption of the terminal and the network device.

In a possible implementation, the first carrier and the at least one second carrier belong to a same cell, the first carrier and the at least one second carrier are time-frequency synchronized, or the first carrier and the at least one second carrier are time-frequency synchronized and the first carrier and the at least one second carrier belong to a same cell. Based on the foregoing method, after performing synchronization measurement on the first carrier, the terminal may not perform synchronization measurement on the second carrier, and a synchronization measurement result on the first carrier may be used for the second carrier. In this way, measurement overheads can be reduced, and power consumption of the terminal can be reduced.

In a possible implementation, a frequency band in which the first carrier is located is different from a frequency band in which the second carrier is located. Based on the foregoing method, resources suitable for the first carrier and the second carrier may be separately configured for the first carrier and the second carrier.

In a possible implementation, the first carrier is used by the terminal and the network device to establish time-frequency synchronization, and the at least one second carrier is used by the terminal and the network device to perform data transmission. Based on the foregoing method, the terminal and the network device may use a communication mode in which synchronization measurement is decoupled from data transmission, so that synchronization measurement efficiency or mobility measurement efficiency can be improved, the measurement overheads can be reduced, data transmission quality can be improved, and resource utilization can be improved.

In a possible implementation, the first information or a resource used to transmit the first information meets at least one of the following: The first information or the resource used to transmit the first information corresponds to the at least one second carrier; the first information or the resource used to transmit the first information corresponds to the at least one beam; the first information or the resource used to transmit the first information corresponds to the frequency band in which the second carrier is located; the first information or the resource used to transmit the first information corresponds to a level to which a size of a buffer status report of to-be-sent data belongs; and the first information or the resource used to transmit the first information corresponds to a service feature of to-be-sent data. Based on the foregoing method, the terminal may indicate the at least one second carrier to the network device by using the first information or the resource used to transmit the first information, so that the network device determines to receive or send the reference signal on the at least one second carrier.

In a possible implementation, the method further includes: The terminal receives configuration information of the reference signal, where the configuration information of the reference signal indicates at least one of the following: at least one type of reference signal, a reference signal on the at least one second carrier, and at least one measurement time period of the reference signal. Based on the foregoing method, the terminal may send or receive the reference signal on the at least one second carrier based on the configuration information of the reference signal.

In a possible implementation, the method further includes: The terminal receives first indication information, where the first indication information indicates that the configuration information of the reference signal takes effect. Alternatively, the terminal receives second indication information, where the second indication information indicates that the configuration information of the reference signal does not take effect. Based on the foregoing method, the terminal may start to use the configuration information of the reference signal according to an indication of the network device. Alternatively, the terminal may stop, according to an indication of the network device, using the configuration information of the reference signal.

In a possible implementation, the first indication information further indicates that the communication mode in which synchronization measurement is decoupled from data transmission is used. Based on the foregoing method, the terminal may determine, based on the first indication information, to communicate with the network device in the communication mode in which synchronization measurement is decoupled from data transmission, to improve the synchronization measurement efficiency or the mobility measurement efficiency, the data transmission quality, and the resource utilization, and reduce the measurement overheads.

In a possible implementation, the method further includes: The terminal sends second information to the network device, where the second information indicates the terminal to stop sending or receiving the reference signal on the at least one second carrier or the at least one beam of the at least one second carrier. Alternatively, the terminal receives third information from the network device, where the third information indicates the terminal to stop sending or receiving the reference signal on the at least one second carrier or the at least one beam of the at least one second carrier. Based on the foregoing method, the terminal or the network device may trigger the terminal to stop sending or receiving the reference signal on the at least one second carrier or the at least one beam, to improve the mobility measurement efficiency and the resource utilization, and reduce the power consumption of the terminal and the network device.

In a possible implementation, the method further includes: The terminal receives configuration information of a timer from the network device. When the timer expires, the terminal stops sending or receiving the reference signal on the at least one second carrier or the at least one beam. Based on the foregoing method, the network device may configure the timer, so that when the timer expires, the terminal stops sending or receiving the reference signal on the at least one second carrier or the at least one beam.

In a possible implementation, that a terminal sends first information to a network device on a first carrier includes: When it is determined that there is to-be-sent data, the terminal sends the first information to the network device on the first carrier. Alternatively, when it is determined that there is an association relationship between the first carrier and the at least one second carrier, the terminal sends the first information to the network device on the first carrier. Alternatively, when a measurement reporting event is met, the terminal sends the first information to the network device on the first carrier. Based on the foregoing method, when there is an uplink requirement, it is determined that there is the association relationship between the first carrier and the at least one second carrier, or the measurement reporting event is met, the terminal may send the first information to the network device on the first carrier, to trigger the network device to receive or send the reference signal.

In a possible implementation, the measurement reporting event includes at least one of the following: Signal quality of the first carrier is less than a first threshold; signal quality of a third carrier is greater than or equal to a second threshold; and signal quality of the first carrier is less than a first threshold and signal quality of a third carrier is greater than or equal to a second threshold. Based on the foregoing method, when the foregoing condition is met, the terminal may send the first information to the network device on the first carrier, to trigger the network device to receive or send the reference signal.

In a possible implementation, a frequency of the first carrier is the same as a frequency of the third carrier. Based on the foregoing method, the terminal does not need to perform inter-frequency measurement, so that measurement complexity of the terminal is reduced.

In a possible implementation, the third carrier and the at least one second carrier belong to a same cell, or the third carrier and the at least one second carrier are time-frequency synchronized. Based on the foregoing method, the terminal and the network device do not need to perform synchronization measurement on the third carrier, so that the measurement overheads can be reduced.

In a possible implementation, the method further includes: The terminal receives fourth information from the network device, where the fourth information indicates at least one of the following: the first carrier, the at least one second carrier, and the association relationship between the first carrier and the at least one second carrier, and the fourth information indicates that the communication mode in which synchronization measurement is decoupled from data transmission is used. Based on the foregoing method, the terminal may determine, based on the fourth information, the first carrier used for synchronization measurement or mobility measurement or the at least one second carrier used for channel measurement or data transmission, or determine, based on the fourth information, that the terminal communicates with the network device in the communication mode in which synchronization measurement is decoupled from data transmission.

In a possible implementation, at least one item indicated by the fourth information is determined based on capability information of the terminal. Based on the foregoing method, the network device may determine the information in the fourth information based on the capability information of the terminal.

In a possible implementation, the capability information of the terminal indicates at least one of the following: a frequency band supported by the terminal, a quantity of carriers that can be used by the terminal in the frequency band supported by the terminal, a moving speed of the terminal, a location of the terminal, and signal quality of the terminal on the first carrier. Based on the foregoing method, the network device may determine the information in the fourth information based on at least one of the foregoing information.

In a possible implementation, the method further includes: The terminal sends the capability information of the terminal to the network device. Based on the foregoing method, the terminal may report the capability information of the terminal to the network device, so that the network device determines the information in the fourth information based on the capability information of the terminal.

In a possible implementation, after the terminal sends or receives a measurement signal on the at least one second carrier or the at least one beam, the method further includes: The terminal determines a fourth carrier, where the fourth carrier is one of the at least one second carrier. The terminal sends data to the network device on the fourth carrier. Based on the foregoing method, the terminal may determine the fourth carrier in the at least one second carrier, to send the data to the network device.

In a possible implementation, the first carrier is located in a first frequency band, and the second carrier is located in a second frequency band, where the first frequency band is lower than the second frequency band. Alternatively, the first frequency band is located at a coverage layer, and the second frequency band is located at a data transmission layer. Based on the foregoing method, frequency resources with a low frequency may be allocated to the first carrier, so that one time of measurement can cover a large quantity of cells, measurement efficiency can be improved, and the measurement overheads can be reduced. Frequency resources with a high frequency may be configured for the second carrier, and most of these frequency resources have not been used. Therefore, a data transmission requirement can be met, and communication quality between the terminal and the network device and user experience can be improved.

In a possible implementation, the first information is a scheduling request, a buffer status report, or reporting information. Based on the foregoing method, the first information has a plurality of forms, in other words, the terminal may trigger the measurement on the at least one second carrier or the at least one beam of the at least one second carrier in a plurality of forms.

In a possible implementation, the reporting information includes at least one of the following: an identifier of the at least one second carrier, an identifier of the frequency band in which the at least one second carrier is located, and an index of the configuration information of the reference signal. Based on the foregoing method, the reporting information may indicate the at least one second carrier to the network device by using the identifier of the at least one second carrier or the identifier of the frequency band in which the at least one second carrier is located, so that the network device determines to receive or send the reference signal on the at least one second carrier. The reporting information may indicate, by using the index of the configuration information of the reference signal, the network device to activate the configuration information of the reference signal corresponding to the index of the configuration information of the reference signal.

In a possible implementation, the reporting information indicates to activate signal transmission on the at least one second carrier or in the frequency band in which the at least one second carrier is located. Based on the foregoing method, the reporting information may be used to activate the signal transmission on the at least one second carrier or in the frequency band in which the at least one second carrier is located.

In a possible implementation, the reporting information is transmitted by using radio resource control signaling, the reporting information is carried in uplink control information, or the reporting information is included in a scheduling request. Based on the foregoing method, the reporting information may be carried in different signaling, to improve flexibility of transmitting the reporting information.

In a possible implementation, if the reporting information is carried in the uplink control information, the reporting information is included in a first field in the uplink control information, where the first field is an existing field in the uplink control information; or the reporting information is included in a second field in the uplink control information, where the second field is a newly added field in the uplink control information. Based on the foregoing method, the reporting information may be carried in the existing field in the uplink control information, or may be carried in the newly added field in the uplink control information.

According to a second aspect, an embodiment of this application provides a communication method. The method includes: A network device receives first information from a terminal on a first carrier, and receives or sends a reference signal on at least one second carrier or at least one beam. The first information is used to trigger measurement on the at least one second carrier or the at least one beam of the at least one second carrier.

Based on the method provided in the second method, the network device may receive the first information from the terminal on the first carrier, to trigger the measurement on the at least one second carrier or the at least one beam of the at least one second carrier. Subsequently, the network device may receive the reference signal from the terminal or send the reference signal to the terminal on the at least one second carrier or the at least one beam. In this manner, sending of reference signals on some carriers or some beams may be triggered based on a requirement. The terminal does not need to receive or send a reference signal on each configured carrier and/or beam or each activated carrier and/or beam, and the network device does not need to send or receive the reference signal on each carrier and/or beam configured for the terminal or each activated carrier and/or beam. This can reduce communication overheads and power consumption of the terminal and the network device.

In a possible implementation, the first carrier and the at least one second carrier belong to a same cell, the first carrier and the at least one second carrier are time-frequency synchronized, or the first carrier and the at least one second carrier are time-frequency synchronized and the first carrier and the at least one second carrier belong to a same cell. Based on the foregoing method, after performing synchronization measurement on the first carrier, the network device may not perform synchronization measurement on the second carrier, and a synchronization measurement result on the first carrier may be used for the second carrier. In this way, measurement overheads can be reduced, and power consumption of the network device can be reduced.

In a possible implementation, a frequency band in which the first carrier is located is different from a frequency band in which the second carrier is located. Based on the foregoing method, resources suitable for the first carrier and the second carrier may be separately configured for the first carrier and the second carrier.

In a possible implementation, the first carrier is used by the terminal and the network device to establish time-frequency synchronization, and the at least one second carrier is used by the terminal and the network device to perform data transmission. Based on the foregoing method, the terminal and the network device may use a communication mode in which synchronization measurement is decoupled from data transmission, so that synchronization measurement efficiency or mobility measurement efficiency can be improved, the measurement overheads can be reduced, data transmission quality can be improved, and resource utilization can be improved.

In a possible implementation, the first information or a resource used to transmit the first information meets at least one of the following: The first information or the resource used to transmit the first information corresponds to the at least one second carrier; the first information or the resource used to transmit the first information corresponds to the at least one beam; the first information or the resource used to transmit the first information corresponds to the frequency band in which the second carrier is located; the first information or the resource used to transmit the first information corresponds to a level to which a size of a buffer status report of to-be-sent data belongs; and the first information or the resource used to transmit the first information corresponds to a service feature of to-be-sent data. Based on the foregoing method, the network device may determine the at least one second carrier based on the first information or the resource used to transmit the first information, and receive or send the reference signal on the at least one second carrier.

In a possible implementation, the method further includes: The network device sends configuration information of the reference signal, where the configuration information of the reference signal indicates at least one of the following: at least one type of reference signal, a reference signal on the at least one second carrier, and at least one measurement time period of the reference signal. Based on the foregoing method, the network device may send the configuration information of the reference signal to the terminal, so that the terminal sends or receives the reference signal on the at least one second carrier based on the configuration information of the reference signal.

In a possible implementation, the method further includes: The network device sends first indication information, where the first indication information indicates that the configuration information of the reference signal takes effect. Alternatively, the network device sends second indication information, where the second indication information indicates that the configuration information of the reference signal does not take effect. Based on the foregoing method, the network device may indicate that the configuration information of the reference signal takes effect, so that the terminal starts to use the configuration information of the reference signal. Alternatively, the network device may indicate that the configuration information of the reference signal does not take effect, so that the terminal stops using the configuration information of the reference signal.

In a possible implementation, the first indication information further indicates that the communication mode in which synchronization measurement is decoupled from data transmission is used. Based on the foregoing method, the network device may indicate, by using the first indication information, the terminal to communicate with the network device in the communication mode in which synchronization measurement is decoupled from data transmission, to improve the synchronization measurement efficiency or the mobility measurement efficiency, the data transmission quality, and the resource utilization, and reduce the measurement overheads.

In a possible implementation, the method further includes: The network device receives second information from the terminal, where the second information indicates the terminal to stop sending or receiving the reference signal on the at least one second carrier or the at least one beam of the at least one second carrier. Alternatively, the network device sends third information to the terminal, where the third information indicates the terminal to stop sending or receiving the reference signal on the at least one second carrier or the at least one beam of the at least one second carrier. Based on the foregoing method, the terminal or the network device may trigger the terminal to stop sending or receiving the reference signal on the at least one second carrier or the at least one beam, to improve the mobility measurement efficiency and the resource utilization, and reduce the power consumption of the terminal and the network device.

In a possible implementation, the method further includes: The network device sends configuration information of a timer to the terminal. When the timer expires, the network device stops receiving or sending the reference signal on the at least one second carrier or the at least one beam. Based on the foregoing method, the network device may configure the timer, so that when the timer expires, the network device stops receiving or sending the reference signal on the at least one second carrier or the at least one beam.

In a possible implementation, that a network device receives first information from a terminal on a first carrier includes: When it is determined that there is to-be-sent data, the network device receives the first information from the terminal on the first carrier. Alternatively, when it is determined that there is an association relationship between the first carrier and the at least one second carrier, the network device receives the first information from the terminal on the first carrier. Alternatively, when a measurement reporting event is met, the network device receives the first information from the terminal on the first carrier. Based on the foregoing method, when the terminal has an uplink requirement, the terminal determines that there is the association relationship between the first carrier and the at least one second carrier, or the measurement reporting event is met, the network device may receive the first information from the terminal on the first carrier, to trigger the network device to receive or send the reference signal.

In a possible implementation, the measurement reporting event includes at least one of the following: Signal quality of the first carrier is less than a first threshold; signal quality of a third carrier is greater than or equal to a second threshold; and signal quality of the first carrier is less than a first threshold and signal quality of a third carrier is greater than or equal to a second threshold. Based on the foregoing method, when the foregoing condition is met, the network device may receive the first information from the terminal on the first carrier, to trigger the network device to receive or send the reference signal.

In a possible implementation, a frequency of the first carrier is the same as a frequency of the third carrier. Based on the foregoing method, the network device does not need to perform inter-frequency measurement, so that measurement complexity of the network device is reduced.

In a possible implementation, the third carrier and the at least one second carrier belong to a same cell, or the third carrier and the at least one second carrier are time-frequency synchronized. Based on the foregoing method, the terminal and the network device do not need to perform synchronization measurement on the third carrier, so that the measurement overheads can be reduced.

In a possible implementation, the method further includes: The network device sends fourth information to the terminal, where the fourth information indicates at least one of the following: the first carrier, the at least one second carrier, and the association relationship between the first carrier and the at least one second carrier, and the fourth information indicates that the communication mode in which synchronization measurement is decoupled from data transmission is used. Based on the foregoing method, the network device may send the fourth information to the terminal, so that the terminal determines, based on the fourth information, the first carrier used for synchronization measurement or mobility measurement or the at least one second carrier used for channel measurement or data transmission, or determines, based on the fourth information, that the terminal communicates with the network device in the communication mode in which synchronization measurement is decoupled from data transmission.

In a possible implementation, at least one item indicated by the fourth information is determined based on capability information of the terminal. Based on the foregoing method, the network device may determine the information in the fourth information based on the capability information of the terminal.

In a possible implementation, the capability information of the terminal indicates at least one of the following: a frequency band supported by the terminal, a quantity of carriers that can be used by the terminal in the frequency band supported by the terminal, a moving speed of the terminal, location information of the terminal, and signal quality of the terminal on the first carrier. Based on the foregoing method, the network device may determine the information in the fourth information based on at least one of the foregoing information.

In a possible implementation, the method further includes: The network device receives the capability information of the terminal from the terminal. Based on the foregoing method, the network device may receive the capability information of the terminal from the terminal, so that the network device determines the information in the fourth information based on the capability information of the terminal.

In a possible implementation, after the network device receives or sends a measurement signal on the at least one second carrier or the at least one beam, the method further includes: The network device determines a fourth carrier, where the fourth carrier is one of the at least one second carrier. The network device receives data from the terminal on the fourth carrier. Based on the foregoing method, the network device may determine the fourth carrier in the at least one second carrier, to send the data to the network device.

In a possible implementation, the first carrier is located in a first frequency band, and the second carrier is located in a second frequency band, where the first frequency band is lower than the second frequency band. Alternatively, the first frequency band is located at a coverage layer, and the second frequency band is located at a data transmission layer. Based on the foregoing method, frequency resources with a low frequency may be allocated to the first carrier, so that one time of measurement can cover a large quantity of cells, measurement efficiency can be improved, and the measurement overheads can be reduced. Frequency resources with a high frequency may be configured for the second carrier, and most of these frequency resources have not been used. Therefore, a data transmission requirement can be met, and communication quality between the terminal and the network device and user experience can be improved.

In a possible implementation, the first information is a scheduling request, a buffer status report, or reporting information. Based on the foregoing method, the first information has a plurality of forms, in other words, the terminal may trigger the measurement on the at least one second carrier or the at least one beam of the at least one second carrier in a plurality of forms.

In a possible implementation, the reporting information includes at least one of the following: an identifier of the at least one second carrier, an identifier of the frequency band in which the at least one second carrier is located, and an index of the configuration information of the reference signal. The reporting information indicates to activate signal transmission on the at least one second carrier or in the frequency band in which the at least one second carrier is located. Based on the foregoing method, the reporting information may indicate the at least one second carrier to the network device by using the identifier of the at least one second carrier or the identifier of the frequency band in which the at least one second carrier is located, so that the network device determines to receive or send the reference signal on the at least one second carrier. The reporting information may indicate, by using the index of the configuration information of the reference signal, the network device to activate the configuration information of the reference signal corresponding to the index of the configuration information of the reference signal.

In a possible implementation, the reporting information indicates to activate the signal transmission on the at least one second carrier or in the frequency band in which the at least one second carrier is located. Based on the foregoing method, the reporting information may be used to activate the signal transmission on the at least one second carrier or in the frequency band in which the at least one second carrier is located.

In a possible implementation, the reporting information is transmitted by using radio resource control signaling, the reporting information is carried in uplink control information, or the reporting information is included in a scheduling request. Based on the foregoing method, the reporting information may be carried in different signaling, to improve flexibility of transmitting the reporting information.

In a possible implementation, if the reporting information is carried in the uplink control information, the reporting information is included in a first field in the uplink control information, where the first field is an existing field in the uplink control information; or the reporting information is included in a second field in the uplink control information, where the second field is a newly added field in the uplink control information. Based on the foregoing method, the reporting information may be carried in the existing field in the uplink control information, or may be carried in the newly added field in the uplink control information.

According to a third aspect, an embodiment of this application provides a communication apparatus, to implement the method according to any one of the first aspect or the possible implementations of the first aspect. The apparatus includes a corresponding unit or component configured to perform the foregoing method. The unit included in the apparatus may be implemented by software and/or hardware. The apparatus may be, for example, a terminal, or a chip, a chip system, or a processor that can support the terminal in implementing the foregoing method.

According to a fourth aspect, an embodiment of this application provides a communication apparatus, to implement the method according to any one of the second aspect or the possible implementations of the second aspect. The apparatus includes a corresponding unit or component configured to perform the foregoing method. The unit included in the apparatus may be implemented by software and/or hardware. The apparatus may be, for example, a network device, or a chip, a chip system, or a processor that can support the network device in implementing the foregoing method.

According to a fifth aspect, an embodiment of this application provides a communication apparatus. The communication apparatus includes a processor, the processor is coupled to a memory, and the memory is configured to store a program or instructions. When the program or the instructions are executed by the processor, the apparatus is enabled to implement the method according to any one of the first aspect or the possible implementations of the first aspect.

According to a sixth aspect, an embodiment of this application provides a communication apparatus. The communication apparatus includes a processor, the processor is coupled to a memory, and the memory is configured to store a program or instructions. When the program or the instructions are executed by the processor, the apparatus is enabled to implement the method according to any one of the second aspect or the possible implementations of the second aspect.

According to a seventh aspect, an embodiment of this application provides a chip system. The chip system includes at least one processor, configured to support implementation of functions according to any one of the first aspect or the possible implementations of the first aspect, for example, receiving, sending, or processing of data and/or information in the foregoing method.

According to an eighth aspect, an embodiment of this application provides a chip system. The chip system includes at least one processor, configured to support implementation of functions according to any one of the second aspect or the possible implementations of the second aspect, for example, receiving, sending, or processing of data and/or information in the foregoing method.

In a possible implementation of the seventh aspect or the eighth aspect, the chip system further includes a memory. The memory is configured to store program instructions and data, and the memory is located inside the processor or outside the processor. The chip system may include a chip, or may include a chip and another discrete component.

According to a ninth aspect, an embodiment of this application provides a computer-readable medium. The computer-readable medium stores a computer program or instructions. When the computer program or the instructions are executed, a computer is enabled to perform the method according to any one of the first aspect or the possible implementations of the first aspect.

According to a tenth aspect, an embodiment of this application provides a computer-readable medium. The computer-readable medium stores a computer program or instructions. When the computer program or the instructions are executed, a computer is enabled to perform the method according to any one of the second aspect or the possible implementations of the second aspect.

According to an eleventh aspect, an embodiment of this application provides a computer program product. The computer program product includes computer program code. When the computer program code is run on a computer, the computer is enabled to perform the method according to any one of the first aspect or the possible implementations of the first aspect.

According to a twelfth aspect, an embodiment of this application provides a computer program product. The computer program product includes computer program code. When the computer program code is run on a computer, the computer is enabled to perform the method according to any one of the second aspect or the possible implementations of the second aspect.

According to a thirteenth aspect, an embodiment of this application provides a communication system. The system includes the apparatus according to the third aspect and/or the fourth aspect, the system includes the apparatus according to the fifth aspect and/or the sixth aspect, the system includes the chip system according to the seventh aspect and/or the eighth aspect, the system includes the computer-readable medium according to the ninth aspect and/or the tenth aspect, or the system includes the computer program product according to the eleventh aspect and/or the twelfth aspect.

It may be understood that any communication apparatus, chip system, computer-readable medium, computer program product, communication system, or the like provided above is configured to perform a corresponding method provided above. Therefore, for beneficial effects that can be achieved by the communication apparatus, the chip system, the computer-readable medium, the computer program product, the communication system, or the like, refer to the beneficial effects in the corresponding method. Details are not described herein again.

According to a fourteenth aspect, an embodiment of this application provides a communication method. The method includes: A terminal receives configuration information of a reference signal from a network device on a first carrier, and sends or receives the reference signal on at least one second carrier based on the configuration information of the reference signal. The configuration information of the reference signal indicates at least one of the following: at least one type of reference signal, a reference signal on the at least one second carrier, and at least one measurement time period of the reference signal.

Based on the method provided in the fourteenth aspect, the terminal may receive the configuration information of the reference signal on the first carrier, where the configuration information of the reference signal may indicate a related configuration of measurement on the at least one second carrier, so that the terminal and the network device may start the measurement on the at least one second carrier based on the configuration information of the reference signal.

In a possible implementation, the method further includes: The terminal receives first indication information, where the first indication information indicates that the configuration information of the reference signal takes effect. Alternatively, the terminal receives second indication information, where the second indication information indicates that the configuration information of the reference signal does not take effect. Based on the foregoing method, the terminal may start to use the configuration information of the reference signal according to an indication of the network device. Alternatively, the terminal may stop, according to an indication of the network device, using the configuration information of the reference signal.

In a possible implementation, the first indication information indicates that a communication mode in which synchronization measurement is decoupled from data transmission is used. Based on the foregoing method, the terminal may determine, based on the first indication information, to communicate with the network device in the communication mode in which synchronization measurement is decoupled from data transmission, to improve synchronization measurement efficiency or mobility measurement efficiency, data transmission quality, and resource utilization, and reduce measurement overheads.

In a possible implementation, the first carrier and the at least one second carrier belong to a same cell, the first carrier and the at least one second carrier are time-frequency synchronized, or the first carrier and the at least one second carrier are time-frequency synchronized and the first carrier and the at least one second carrier belong to a same cell. Based on the foregoing method, after performing synchronization measurement on the first carrier, the terminal may not perform synchronization measurement on the second carrier, and a synchronization measurement result on the first carrier may be used for the second carrier. In this way, the measurement overheads can be reduced, and power consumption of the terminal can be reduced.

In a possible implementation, a frequency band in which the first carrier is located is different from a frequency band in which the second carrier is located. Based on the foregoing method, resources suitable for the first carrier and the second carrier may be separately configured for the first carrier and the second carrier.

In a possible implementation, the first carrier is used by the terminal and the network device to establish time-frequency synchronization, and the at least one second carrier is used by the terminal and the network device to perform data transmission. Based on the foregoing method, the terminal and the network device may use the communication mode in which synchronization measurement is decoupled from data transmission, so that the synchronization measurement efficiency or the mobility measurement efficiency can be improved, the measurement overheads can be reduced, the data transmission quality can be improved, and the resource utilization can be improved.

In a possible implementation, the method further includes: The terminal sends first information to the network device on the first carrier, where the first information is used to trigger measurement on the at least one second carrier or at least one beam of at least one second carrier. Based on the foregoing method, the terminal may send the first information to the network device on the first carrier, to trigger the measurement on the at least one second carrier or the at least one beam of the at least one second carrier. Subsequently, the terminal may send or receive the reference signal on the at least one second carrier or the at least one beam. In an aspect, the terminal does not need to continuously perform signal measurement, but may trigger signal measurement based on a requirement. In this way, the terminal starts to measure signal quality only after the terminal triggers the signal measurement, so that overheads and the power consumption of the terminal can be reduced. In another aspect, the terminal may trigger the measurement on the second carrier on the first carrier, in other words, the terminal may select, based on a requirement, a carrier for measurement, so that the signal measurement is more purposeful and measurement efficiency is higher.

In a possible implementation, the first information or a resource used to transmit the first information meets at least one of the following: The first information or the resource used to transmit the first information corresponds to the at least one second carrier; the first information or the resource used to transmit the first information corresponds to the at least one beam; the first information or the resource used to transmit the first information corresponds to the frequency band in which the second carrier is located; the first information or the resource used to transmit the first information corresponds to a level to which a size of a buffer status report of to-be-sent data belongs; and the first information or the resource used to transmit the first information corresponds to a service feature of to-be-sent data. Based on the foregoing method, the terminal may indicate the at least one second carrier to the network device by using the first information or the resource used to transmit the first information, so that the network device determines to receive or send the reference signal on the at least one second carrier.

In a possible implementation, that the terminal sends first information to the network device on the first carrier includes: When it is determined that there is to-be-sent data, the terminal sends the first information to the network device on the first carrier. Alternatively, when it is determined that there is an association relationship between the first carrier and the at least one second carrier, the terminal sends the first information to the network device on the first carrier. Alternatively, when a measurement reporting event is met, the terminal sends the first information to the network device on the first carrier. Based on the foregoing method, when there is an uplink requirement, it is determined that there is the association relationship between the first carrier and the at least one second carrier, or the measurement reporting event is met, the terminal may send the first information to the network device on the first carrier, to trigger the network device to receive or send the reference signal.

In a possible implementation, the measurement reporting event includes at least one of the following: Signal quality of the first carrier is less than a first threshold; signal quality of a third carrier is greater than or equal to a second threshold; and signal quality of the first carrier is less than a first threshold and signal quality of a third carrier is greater than or equal to a second threshold. Based on the foregoing method, when the foregoing condition is met, the terminal may send the first information to the network device on the first carrier, to trigger the network device to receive or send the reference signal.

In a possible implementation, a frequency of the first carrier is the same as a frequency of the third carrier. Based on the foregoing method, the terminal does not need to perform inter-frequency measurement, so that measurement complexity of the terminal is reduced.

In a possible implementation, the third carrier and the at least one second carrier belong to a same cell, or the third carrier and the at least one second carrier are time-frequency synchronized. Based on the foregoing method, the terminal and the network device do not need to perform synchronization measurement on the third carrier, so that the measurement overheads can be reduced.

In a possible implementation, the method further includes: The terminal sends second information to the network device, where the second information indicates the terminal to stop sending or receiving the reference signal on the at least one second carrier or the at least one beam of the at least one second carrier. Alternatively, the terminal receives third information from the network device, where the third information indicates the terminal to stop sending or receiving the reference signal on the at least one second carrier or the at least one beam of the at least one second carrier. Based on the foregoing method, the terminal or the network device may trigger the terminal to stop sending or receiving the reference signal on the at least one second carrier or the at least one beam, to improve the mobility measurement efficiency and the resource utilization, and reduce power consumption of the terminal and the network device.

In a possible implementation, the method further includes: The terminal receives configuration information of a timer from the network device. When the timer expires, the terminal stops sending or receiving the reference signal on the at least one second carrier or the at least one beam. Based on the foregoing method, the network device may configure the timer, so that when the timer expires, the terminal stops sending or receiving the reference signal on the at least one second carrier or the at least one beam.

In a possible implementation, the method further includes: The terminal receives fourth information from the network device, where the fourth information indicates at least one of the following: the first carrier, the at least one second carrier, and the association relationship between the first carrier and the at least one second carrier, and the fourth information indicates that the communication mode in which synchronization measurement is decoupled from data transmission is used. Based on the foregoing method, the terminal may determine, based on the fourth information, the first carrier used for synchronization measurement or mobility measurement or the at least one second carrier used for channel measurement or data transmission, or determine, based on the fourth information, that the terminal communicates with the network device in the communication mode in which synchronization measurement is decoupled from data transmission.

In a possible implementation, at least one item indicated by the fourth information is determined based on capability information of the terminal. Based on the foregoing method, the network device may determine the information in the fourth information based on the capability information of the terminal.

In a possible implementation, the capability information of the terminal indicates at least one of the following: a frequency band supported by the terminal, a quantity of carriers that can be used by the terminal in the frequency band supported by the terminal, a moving speed of the terminal, a location of the terminal, and signal quality of the terminal on the first carrier. Based on the foregoing method, the network device may determine the information in the fourth information based on at least one of the foregoing information.

In a possible implementation, the method further includes: The terminal sends the capability information of the terminal to the network device. Based on the foregoing method, the terminal may report the capability information of the terminal to the network device, so that the network device determines the information in the fourth information based on the capability information of the terminal.

In a possible implementation, after the terminal sends or receives a measurement signal on the at least one second carrier or the at least one beam, the method further includes: The terminal determines a fourth carrier, where the fourth carrier is one of the at least one second carrier. The terminal sends data to the network device on the fourth carrier. Based on the foregoing method, the terminal may determine the fourth carrier in the at least one second carrier, to send the data to the network device.

In a possible implementation, the first carrier is located in a first frequency band, and the second carrier is located in a second frequency band, where the first frequency band is lower than the second frequency band. Alternatively, the first frequency band is located at a coverage layer, and the second frequency band is located at a data transmission layer. Based on the foregoing method, frequency resources with a low frequency may be allocated to the first carrier, so that one time of measurement can cover a large quantity of cells, measurement efficiency can be improved, and the measurement overheads can be reduced. Frequency resources with a high frequency may be configured for the second carrier, and most of these frequency resources have not been used. Therefore, a data transmission requirement can be met, and communication quality between the terminal and the network device and user experience can be improved.

In a possible implementation, the first information is a scheduling request, a buffer status report, or reporting information. Based on the foregoing method, the first information has a plurality of forms, in other words, the terminal may trigger the measurement on the at least one second carrier or the at least one beam of the at least one second carrier in a plurality of forms.

In a possible implementation, the reporting information includes at least one of the following: an identifier of the at least one second carrier, an identifier of the frequency band in which the at least one second carrier is located, and an index of the configuration information of the reference signal. Based on the foregoing method, the reporting information may indicate the at least one second carrier to the network device by using the identifier of the at least one second carrier or the identifier of the frequency band in which the at least one second carrier is located, so that the network device determines to receive or send the reference signal on the at least one second carrier. The reporting information may indicate, by using the index of the configuration information of the reference signal, the network device to activate the configuration information of the reference signal corresponding to the index of the configuration information of the reference signal.

In a possible implementation, the reporting information indicates to activate signal transmission on the at least one second carrier or in the frequency band in which the at least one second carrier is located. Based on the foregoing method, the reporting information may be used to activate the signal transmission on the at least one second carrier or in the frequency band in which the at least one second carrier is located.

In a possible implementation, the reporting information is transmitted by using radio resource control signaling, the reporting information is carried in uplink control information, or the reporting information is included in a scheduling request. Based on the foregoing method, the reporting information may be carried in different signaling, to improve flexibility of transmitting the reporting information.

In a possible implementation, if the reporting information is carried in the uplink control information, the reporting information is included in a first field in the uplink control information, where the first field is an existing field in the uplink control information; or the reporting information is included in a second field in the uplink control information, where the second field is a newly added field in the uplink control information. Based on the foregoing method, the reporting information may be carried in the existing field in the uplink control information, or may be carried in the newly added field in the uplink control information.

According to a fifteenth aspect, an embodiment of this application provides a communication method. The method includes: A network device sends configuration information of a reference signal to a terminal on a first carrier, and receives or sends the reference signal on at least one second carrier based on a parameter corresponding to the configuration information of the reference signal. The configuration information of the reference signal indicates at least one of the following: at least one type of reference signal, a reference signal on the at least one second carrier, and at least one measurement time period of the reference signal.

Based on the method provided in the fifteenth aspect, the network device may send the configuration information of the reference signal to the terminal on the first carrier, so that the terminal may start measurement on the at least one second carrier based on the configuration information of the reference signal.

In a possible implementation, the method further includes: The network device sends first indication information, where the first indication information indicates that the configuration information of the reference signal takes effect. Alternatively, the network device sends second indication information, where the second indication information indicates that the configuration information of the reference signal does not take effect. Based on the foregoing method, the network device may indicate that the configuration information of the reference signal takes effect, so that the terminal starts to use the configuration information of the reference signal. Alternatively, the network device may indicate that the configuration information of the reference signal does not take effect, so that the terminal stops using the configuration information of the reference signal.

In a possible implementation, the first indication information indicates that a communication mode in which synchronization measurement is decoupled from data transmission is used. Based on the foregoing method, the network device may indicate, by using the first indication information, the terminal to communicate with the network device in the communication mode in which synchronization measurement is decoupled from data transmission, to improve synchronization measurement efficiency or mobility measurement efficiency, data transmission quality, and resource utilization, and reduce measurement overheads.

In a possible implementation, the first carrier and the at least one second carrier belong to a same cell, the first carrier and the at least one second carrier are time-frequency synchronized, or the first carrier and the at least one second carrier are time-frequency synchronized and the first carrier and the at least one second carrier belong to a same cell. Based on the foregoing method, after performing synchronization measurement on the first carrier, the network device may not perform synchronization measurement on the second carrier, and a synchronization measurement result on the first carrier may be used for the second carrier. In this way, the measurement overheads can be reduced, and power consumption of the network device can be reduced.

In a possible implementation, a frequency band in which the first carrier is located is different from a frequency band in which the second carrier is located. Based on the foregoing method, resources suitable for the first carrier and the second carrier may be separately configured for the first carrier and the second carrier.

In a possible implementation, the first carrier is used by the terminal and the network device to establish time-frequency synchronization, and the at least one second carrier is used by the terminal and the network device to perform data transmission. Based on the foregoing method, the terminal and the network device may use the communication mode in which synchronization measurement is decoupled from data transmission, so that the synchronization measurement efficiency or the mobility measurement efficiency can be improved, the measurement overheads can be reduced, the data transmission quality can be improved, and the resource utilization can be improved.

In a possible implementation, the method further includes: The network device receives first information from the terminal on the first carrier, where the first information is used to trigger measurement on the at least one second carrier or at least one beam of at least one second carrier. The network device may receive the first information from the terminal on the first carrier, to trigger the measurement on the at least one second carrier or the at least one beam of the at least one second carrier. Subsequently, the network device may receive or send the reference signal on the at least one second carrier or the at least one beam. In an aspect, the network device does not need to continuously send the reference signal, but sends the reference signal after the terminal triggers sending. In this way, overheads and the power consumption of the network device can be reduced. In another aspect, after receiving the first information on the first carrier, the network device starts the measurement on the second carrier, in other words, the network device may determine, according to an indication of the terminal, a carrier for measurement, so that signal measurement is more purposeful and measurement efficiency is higher.

In a possible implementation, the first information or a resource used to transmit the first information meets at least one of the following: The first information or the resource used to transmit the first information corresponds to the at least one second carrier; the first information or the resource used to transmit the first information corresponds to the at least one beam; the first information or the resource used to transmit the first information corresponds to the frequency band in which the second carrier is located; the first information or the resource used to transmit the first information corresponds to a level to which a size of a buffer status report of to-be-sent data belongs; and the first information or the resource used to transmit the first information corresponds to a service feature of to-be-sent data. Based on the foregoing method, the network device may determine the at least one second carrier based on the first information or the resource used to transmit the first information, and receive or send the reference signal on the at least one second carrier.

In a possible implementation, that the network device receives first information from the terminal on the first carrier includes: When it is determined that there is to-be-sent data, the network device receives the first information from the terminal on the first carrier. Alternatively, when it is determined that there is an association relationship between the first carrier and the at least one second carrier, the network device receives the first information from the terminal on the first carrier. Alternatively, when a measurement reporting event is met, the network device receives the first information from the terminal on the first carrier. Based on the foregoing method, when the terminal has an uplink requirement, the terminal determines that there is the association relationship between the first carrier and the at least one second carrier, or the measurement reporting event is met, the network device may receive the first information from the terminal on the first carrier, to trigger the network device to receive or send the reference signal.

In a possible implementation, the measurement reporting event includes at least one of the following: Signal quality of the first carrier is less than a first threshold; signal quality of a third carrier is greater than or equal to a second threshold; and signal quality of the first carrier is less than a first threshold and signal quality of a third carrier is greater than or equal to a second threshold. Based on the foregoing method, when the foregoing condition is met, the network device may receive the first information from the terminal on the first carrier, to trigger the network device to receive or send the reference signal.

In a possible implementation, a frequency of the first carrier is the same as a frequency of the third carrier. Based on the foregoing method, the network device does not need to perform inter-frequency measurement, so that measurement complexity of the network device is reduced.

In a possible implementation, the third carrier and the at least one second carrier belong to a same cell, or the third carrier and the at least one second carrier are time-frequency synchronized. Based on the foregoing method, the terminal and the network device do not need to perform synchronization measurement on the third carrier, so that the measurement overheads can be reduced.

In a possible implementation, the method further includes: The network device receives second information from the terminal, where the second information indicates the terminal to stop sending or receiving the reference signal on the at least one second carrier or the at least one beam of the at least one second carrier. Alternatively, the network device sends third information to the terminal, where the third information indicates the terminal to stop sending or receiving the reference signal on the at least one second carrier or the at least one beam of the at least one second carrier. Based on the foregoing method, the terminal or the network device may trigger the terminal to stop sending or receiving the reference signal on the at least one second carrier or the at least one beam, to improve the mobility measurement efficiency and the resource utilization, and reduce power consumption of the terminal and the network device.

In a possible implementation, the method further includes: The network device sends configuration information of a timer to the terminal. When the timer expires, the network device stops receiving or sending the reference signal on the at least one second carrier or the at least one beam. Based on the foregoing method, the network device may configure the timer, so that when the timer expires, the network device may stop receiving or sending the reference signal on the at least one second carrier or the at least one beam.

In a possible implementation, the method further includes: The network device sends fourth information to the terminal, where the fourth information indicates at least one of the following: the first carrier, the at least one second carrier, and the association relationship between the first carrier and the at least one second carrier, and the fourth information indicates that the communication mode in which synchronization measurement is decoupled from data transmission is used. Based on the foregoing method, the network device may send the fourth information to the terminal, so that the terminal determines, based on the fourth information, the first carrier used for synchronization measurement or mobility measurement or the at least one second carrier used for channel measurement or data transmission, or determines, based on the fourth information, that the terminal communicates with the network device in the communication mode in which synchronization measurement is decoupled from data transmission.

In a possible implementation, at least one item indicated by the fourth information is determined based on capability information of the terminal. Based on the foregoing method, the network device may determine the information in the fourth information based on the capability information of the terminal.

In a possible implementation, the capability information of the terminal indicates at least one of the following: a frequency band supported by the terminal, a quantity of carriers that can be used by the terminal in the frequency band supported by the terminal, a moving speed of the terminal, location information of the terminal, and signal quality of the terminal on the first carrier. Based on the foregoing method, the network device may determine the information in the fourth information based on at least one of the foregoing information.

In a possible implementation, the method further includes: The network device receives the capability information of the terminal from the terminal. Based on the foregoing method, the network device may receive the capability information of the terminal from the terminal, so that the network device determines the information in the fourth information based on the capability information of the terminal.

In a possible implementation, after the terminal sends or receives a measurement signal on the at least one second carrier or the at least one beam, the method further includes: The terminal determines a fourth carrier, where the fourth carrier is one of the at least one second carrier. The terminal sends data to the network device on the fourth carrier. Based on the foregoing method, the network device may determine the fourth carrier in the at least one second carrier, to send the data to the network device.

In a possible implementation, the first carrier is located in a first frequency band, and the second carrier is located in a second frequency band, where the first frequency band is lower than the second frequency band. Alternatively, the first frequency band is located at a coverage layer, and the second frequency band is located at a data transmission layer. Based on the foregoing method, frequency resources with a low frequency may be allocated to the first carrier, so that one time of measurement can cover a large quantity of cells, measurement efficiency can be improved, and the measurement overheads can be reduced. Frequency resources with a high frequency may be configured for the second carrier, and most of these frequency resources have not been used. Therefore, a data transmission requirement can be met, and communication quality between the terminal and the network device and user experience can be improved.

In a possible implementation, the first information is a scheduling request, a buffer status report, or reporting information. Based on the foregoing method, the first information has a plurality of forms, in other words, the terminal may trigger the measurement on the at least one second carrier or the at least one beam of the at least one second carrier in a plurality of forms.

In a possible implementation, the reporting information includes at least one of the following: an identifier of the at least one second carrier, an identifier of the frequency band in which the at least one second carrier is located, and an index of the configuration information of the reference signal. The reporting information indicates to activate signal transmission on the at least one second carrier or in the frequency band in which the at least one second carrier is located. Based on the foregoing method, the reporting information may indicate the at least one second carrier to the network device by using the identifier of the at least one second carrier or the identifier of the frequency band in which the at least one second carrier is located, so that the network device determines to receive or send the reference signal on the at least one second carrier. The reporting information may indicate, by using the index of the configuration information of the reference signal, the network device to activate the configuration information of the reference signal corresponding to the index of the configuration information of the reference signal.

In a possible implementation, the reporting information indicates to activate the signal transmission on the at least one second carrier or in the frequency band in which the at least one second carrier is located. Based on the foregoing method, the reporting information may be used to activate the signal transmission on the at least one second carrier or in the frequency band in which the at least one second carrier is located.

In a possible implementation, the reporting information is transmitted by using radio resource control signaling, the reporting information is carried in uplink control information, or the reporting information is included in a scheduling request. Based on the foregoing method, the reporting information may be carried in different signaling, to improve flexibility of transmitting the reporting information.

In a possible implementation, if the reporting information is carried in the uplink control information, the reporting information is included in a first field in the uplink control information, where the first field is an existing field in the uplink control information; or the reporting information is included in a second field in the uplink control information, where the second field is a newly added field in the uplink control information. Based on the foregoing method, the reporting information may be carried in the existing field in the uplink control information, or may be carried in the newly added field in the uplink control information.

According to a sixteenth aspect, an embodiment of this application provides a communication apparatus, to implement the method according to any one of the fourteenth aspect or the possible implementations of the fourteenth aspect. The apparatus includes a corresponding unit or component configured to perform the foregoing method. The unit included in the apparatus may be implemented by software and/or hardware. The apparatus may be, for example, a terminal, or a chip, a chip system, or a processor that can support the terminal in implementing the foregoing method.

According to a seventeenth aspect, an embodiment of this application provides a communication apparatus, to implement the method according to any one of the fifteenth aspect or the possible implementations of the fifteenth aspect. The apparatus includes a corresponding unit or component configured to perform the foregoing method. The unit included in the apparatus may be implemented by software and/or hardware. The apparatus may be, for example, a network device, or a chip, a chip system, or a processor that can support the network device in implementing the foregoing method.

According to an eighteenth aspect, an embodiment of this application provides a communication apparatus. The communication apparatus includes a processor, the processor is coupled to a memory, and the memory is configured to store a program or instructions. When the program or the instructions are executed by the processor, the apparatus is enabled to implement the method according to any one of the fourteenth aspect or the possible implementations of the fourteenth aspect.

According to a nineteenth aspect, an embodiment of this application provides a communication apparatus. The communication apparatus includes a processor, the processor is coupled to a memory, and the memory is configured to store a program or instructions. When the program or the instructions are executed by the processor, the apparatus is enabled to implement the method according to any one of the fifteenth aspect or the possible implementations of the fifteenth aspect.

According to a twentieth aspect, an embodiment of this application provides a chip system. The chip system includes at least one processor, configured to support implementation of functions according to any one of the fourteenth aspect or the possible implementations of the fourteenth aspect, for example, receiving, sending, or processing of data and/or information in the foregoing method.

According to a twenty-first aspect, an embodiment of this application provides a chip system. The chip system includes at least one processor, configured to support implementation of functions according to any one of the fifteenth aspect or the possible implementations of the fifteenth aspect, for example, receiving, sending, or processing of data and/or information in the foregoing method.

In a possible implementation of the twentieth aspect or the twenty-first aspect, the chip system further includes a memory. The memory is configured to store program instructions and data, and the memory is located inside the processor or outside the processor. The chip system may include a chip, or may include a chip and another discrete component.

According to a twenty-second aspect, an embodiment of this application provides a computer-readable medium. The computer-readable medium stores a computer program or instructions. When the computer program or the instructions are executed, a computer is enabled to perform the method according to any one of the fourteenth aspect or the possible implementations of the fourteenth aspect.

According to a twenty-third aspect, an embodiment of this application provides a computer-readable medium. The computer-readable medium stores a computer program or instructions. When the computer program or the instructions are executed, a computer is enabled to perform the method according to any one of the fifteenth aspect or the possible implementations of the fifteenth aspect.

According to a twenty-fourth aspect, an embodiment of this application provides a computer program product. The computer program product includes computer program code. When the computer program code is run on a computer, the computer is enabled to perform the method according to any one of the fourteenth aspect or the possible implementations of the fourteenth aspect.

According to a twenty-fifth aspect, an embodiment of this application provides a computer program product. The computer program product includes computer program code. When the computer program code is run on a computer, the computer is enabled to perform the method according to any one of the fifteenth aspect or the possible implementations of the fifteenth aspect.

According to a twenty-sixth aspect, an embodiment of this application provides a communication system. The system includes the apparatus according to the sixteenth aspect and/or the seventeenth aspect, the system includes the apparatus according to the eighteenth aspect and/or the nineteenth aspect, the system includes the chip system according to the twentieth aspect and/or the twenty-first aspect, the system includes the computer-readable medium according to the twenty-second aspect and/or the twenty-third aspect, or the system includes the computer program product according to the twenty-fourth aspect and/or the twenty-fifth aspect.

It may be understood that any communication apparatus, chip system, computer-readable medium, computer program product, communication system, or the like provided above is configured to perform a corresponding method provided above. Therefore, for beneficial effects that can be achieved by the communication apparatus, the chip system, the computer-readable medium, the computer program product, the communication system, or the like, refer to the beneficial effects in the corresponding method. Details are not described herein again.

### BRIEF DESCRIPTION OF DRAWINGS

FIG. 1 is a schematic diagram of an architecture of a communication system according to an embodiment of this application;
FIG. 2 is a schematic diagram of a hardware structure of a communication apparatus according to an embodiment of this application;
FIG. 3 is a first schematic flowchart of a communication method according to an embodiment of this application;
FIG. 4A is a second schematic flowchart of a communication method according to an embodiment of this application;
FIG. 4B is a third schematic flowchart of a communication method according to an embodiment of this application;
FIG. 5 is a fourth schematic flowchart of a communication method according to an embodiment of this application;
FIG. 6 is a fifth schematic flowchart of a communication method according to an embodiment of this application;
FIG. 7 is a sixth schematic flowchart of a communication method according to an embodiment of this application;
FIG. 8 is a seventh schematic flowchart of a communication method according to an embodiment of this application; and
FIG. 9 is a schematic diagram of a structure of a communication apparatus according to an embodiment of this application.

### DESCRIPTION OF EMBODIMENTS

To facilitate understanding of technical solutions provided in embodiments of this application, technical terms in this application are first described.

### 1. Cell (cell)

The cell is a logical concept, and is a logical unit that provides a service for a terminal in a communication system. A broadcast signal or a data signal of the cell needs to be carried on a corresponding carrier for transmission. In embodiments of this application, one network device may correspond to a plurality of cells, and one cell may correspond to one network device. One cell may correspond to a plurality of carriers, and one carrier may correspond to one cell. For example, one cell may include a plurality of uplink carriers. A quantity of the plurality of uplink carriers is greater than or equal to 2. The plurality of uplink carriers may correspond to one downlink carrier. Optionally, the plurality of uplink carriers correspond to one downlink anchor (anchor) carrier, or the plurality of uplink carriers correspond to one downlink anchor carrier and one downlink data transmission carrier. The data transmission carrier may also be referred to as a data transmission carrier. A specific correspondence between a network device and a cell and a specific correspondence between a carrier and a cell are not limited in this application.

In embodiments of this application, "correspondence" may also be understood as association or correlation.

### 2. Synchronization measurement

The synchronization measurement is measurement performed to enable a terminal and a network device to achieve time-frequency synchronization. In other words, after the terminal and the network device perform synchronization measurement, the terminal and the network device may remain time-frequency synchronized, in other words, the terminal and the network device are synchronized in time domain and in frequency domain. Usually, in a process of accessing the network device, the terminal may perform synchronization measurement, to subsequently communicate with the network device. After performing synchronization measurement, if the terminal is not disconnected from the network device, the terminal may not need to perform synchronization measurement again.

### 3. Mobility measurement

A terminal has mobility, and may move from coverage of a cell (cell) to coverage of another cell. Therefore, the terminal may perform mobility measurement, for example, perform radio resource management RRM (radio resource management) measurement, to obtain signal quality of a plurality of cells, and camp on a cell with good signal quality. Subsequently, the terminal may communicate with a network device by using the cell with the good signal quality, to improve communication quality between the terminal and the network device. It may be understood that, to enable the terminal to communicate with the network device by using the cell with good signal quality, the terminal needs to continuously perform mobility measurement.

### 4. Channel measurement

The channel measurement is measurement performed on a plurality of carriers or beams between a terminal and a network device, to determine channel quality of the plurality of carriers or beams. The channel measurement may also be referred to as channel estimation. It may be understood that before the terminal and the network device perform data transmission, the terminal or the network device may measure the plurality of carriers or beams between the terminal and the network device, to determine a carrier or beam used for data transmission. The carrier or beam used for the data transmission may be a carrier or beam with good signal quality in the plurality of carriers or beams.

### 5. Frequency band

The frequency band may be understood as a frequency range. In other words, one frequency band may correspond to one frequency range. For example, 1880 MHz to 1900 MHz, 2320 MHz to 2370 MHz, and 2575 MHz to 2635 MHz each may be referred to as a frequency band. A frequency point in a frequency band may be referred to as a frequency. For example, for the frequency band 1880 MHz to 1900 MHz, 1.8 GHz may be referred to as a frequency, or 1.8 GHz is referred to as a main frequency.

In embodiments of this application, a frequency range supported by a communication system may be divided. For example, the frequency range supported by the communication system may be divided into at least two frequency bands based on frequency values. The following two cases are used as examples below for description.

Case 1: The frequency range supported by the communication system may be divided into a first frequency band and a second frequency band based on the frequency values. The first frequency band and the second frequency band correspond to different frequency ranges. In other words, there is no intersection between a frequency range corresponding to the first frequency band and a frequency range corresponding to the second frequency band. For example, the communication system supports 700 MHz, 800 MHz, 1.8 GHz, 2.3 GHz, 2.6 GHz, 4.9 GHz, or a higher frequency. The first frequency band may be a frequency band of 700 MHz to 800 MHz, and the second frequency band may be a frequency band of 1.8 GHz to 2.6 GHz. Alternatively, the first frequency band may be a frequency band of 700 MHz to 1.8 GHz, and the second frequency band may be a frequency band of 2.3 GHz to 2.6 GHz. Alternatively, the first frequency band may be a frequency band of 700 MHz to 1.8 GHz, and the second frequency band may be a frequency band of 2.3 GHz to 4.9 GHz. The first frequency band may also be referred to as a coverage layer, a measurement layer, or the like. The second frequency band may also be referred to as a data transmission layer, a data transmission layer, a flexible layer, or the like.

Case 2: The frequency range supported by the communication system may be divided into a first frequency band, a second frequency band, and a third frequency band based on the frequency values. The first frequency band, the second frequency band, and the third frequency band correspond to different frequency ranges. In other words, there is no intersection between a frequency range corresponding to the first frequency band, a frequency range corresponding to the second frequency band, and a frequency range corresponding to the third frequency band. For example, the communication system supports 700 MHz, 800 MHz, 1.8 GHz, 2.3 GHz, 2.6 GHz, 4.9 GHz, 6 GHz, or a higher frequency. The first frequency band may be a frequency band of 700 MHz and/or 800 MHz, the second frequency band may be a frequency band of 1.8 GHz and/or 2.6 GHz, and the third frequency band may be a frequency band of 4.9 GHz, 6 GHz, and/or the higher frequency. Alternatively, the first frequency band may be a frequency band of 700 MHz, 800 MHz, and/or 1.8 GHz, the second frequency band may be a frequency band of 2.3 GHz and/or 2.6 GHz, and the third frequency band may be a frequency band of 4.9 GHz, 6 GHz, and/or the higher frequency. Alternatively, the first frequency band may be a frequency band of 700 MHz, 800 MHz, and/or 1.8 GHz, the second frequency band may be a frequency band of 2.3 GHz, 2.6 GHz, and/or 4.9 GHz, and the third frequency band may be a frequency band of 6 GHz and/or the higher frequency. The first frequency band may also be referred to as a coverage layer, a measurement layer, or the like. The second frequency band may also be referred to as a data transmission layer, a data transmission layer, or the like. The third frequency band may also be referred to as a flexible layer or the like.

In this application, a frequency band of the higher frequency may be a millimeterwave frequency band, for example, a frequency band of 30 GHz, 52 GHz, or 70 GHz.

In a communication system, before a terminal and a network device perform data transmission, to select a carrier or beam with good signal quality, the terminal device needs to receive a reference signal from the network device or send a reference signal to the network device on each configured carrier and/or beam or each activated carrier and/or beam. Therefore, the network device usually configures, for the terminal, configuration information used for signal measurement on these carriers or beams, and sends reference signals to the terminal or receives reference signals from the terminal on these carriers or beams based on a parameter corresponding to the configuration information. However, for the terminal device, some carriers may not be considered for data transmission within a long time period, but the terminal still needs to receive or send reference signals on these carriers or beams based on configuration information. Consequently, unnecessary power consumption of the terminal is caused. In addition, for the network device, even if some carriers or beams are not considered for data transmission by any terminal device within a time period, the network device still sends or receives reference signals on these carriers or beams. Consequently, unnecessary communication overheads and power consumption of the network device are caused.

The following describes in detail implementations in embodiments of this application with reference to accompanying drawings.

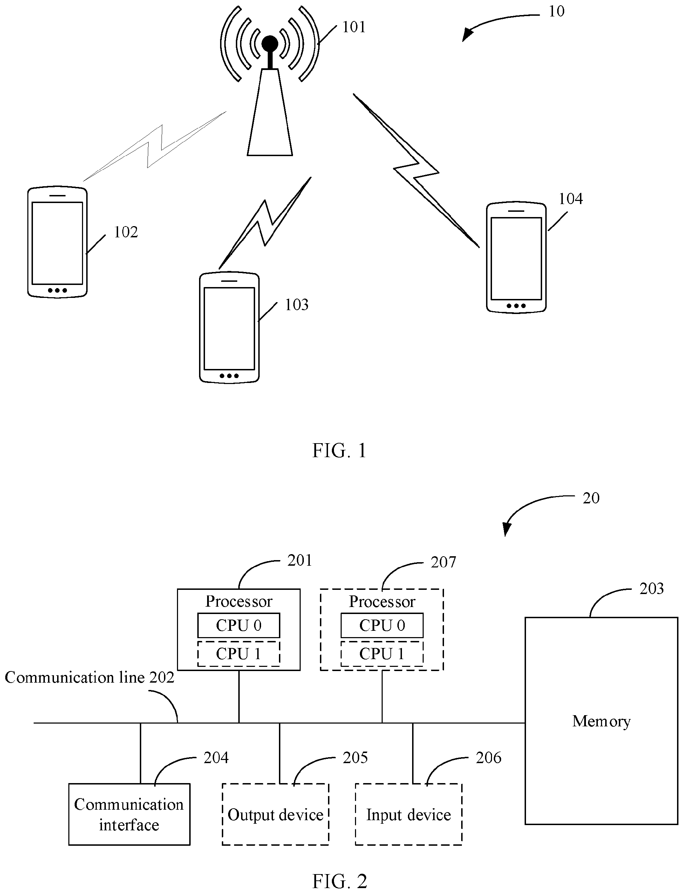

A method provided in embodiments of this application may be applied to various communication systems. For example, the communication system may be a long term evolution (long term evolution, LTE) system, a 5th generation (5th generation, 5G) communication system, a wireless fidelity (wireless fidelity, Wi-Fi) system, a communication system related to the 3rd generation partnership project (3rd generation partnership project, 3GPP), a future evolved communication system, or a system integrating a plurality of systems. This is not limited. 5G may also be referred to as new radio (new radio, NR). The following uses a communication system 10 shown in FIG. 1 as an example to describe the method provided in embodiments of this application.

FIG. 1 is a schematic diagram of an architecture of the communication system 10 according to an embodiment of this application. In FIG. 1, the communication system 10 may include one or more network devices 101 (where only one network device 101 is shown) and a terminal 102 to a terminal 104 that can communicate with the network device 101. FIG. 1 is merely a schematic diagram, and does not constitute a limitation on a scenario to which the technical solutions provided in this application are applicable.

In FIG. 1, the network device may provide a wireless access service for the terminal. Specifically, each network device corresponds to a service coverage area. A terminal that enters the area may communicate with the network device, to receive a wireless access service provided by the network device. Optionally, the service coverage area may include one or more cells (cell).

In FIG. 1, the terminal and the network device may communicate with each other through a Uu interface link. Uu interface links may be classified into an uplink (uplink, LTL) and a downlink (downlink, DL) based on directions of data transmitted on the Uu interface links. Uplink data sent by the terminal to the network device may be transmitted on the UL, and downlink data transmitted by the network device to the terminal may be transmitted on the DL. For example, in FIG. 1, a terminal 103 is located in a coverage area of the network device 101. The network device 101 may send downlink data to the terminal 103 through a DL, and the terminal 103 may send uplink data to the network device 101 through a LTL.

A network device, for example, the network device 101, in embodiments of this application may be any device having a wireless transceiver function. The network device includes but is not limited to: an evolved base station (NodeB or eNB or e-NodeB, evolved NodeB) in LTE, a base station (gNodeB or gNB) or a transmission reception point (transmission receiving point/transmission reception point, TRP) in NR, a base station that subsequently evolves in 3GPP, an access node in a Wi-Fi system, a wireless relay node, a wireless backhaul node, or the like. The base station may be a macro base station, a micro base station, a pico base station, a small cell, a relay station, a balloon station, or the like. A plurality of base stations may support the foregoing networks of a same technology, or may support the foregoing networks of different technologies. The base station may include one or more co-site or non-co-site TRPs. The network device may alternatively be a radio controller in a cloud radio access network (cloud radio access network, CRAN) scenario. The network device may alternatively be a central unit (central unit, CU) and/or a distributed unit (distributed unit, DU). The network device may alternatively be a server, a wearable device, a machine communication device, a vehicle-mounted device, or the like. The following provides descriptions by using an example in which the network device is a base station. A plurality of network devices may be base stations of a same type, or may be base stations of different types. The base station may communicate with a terminal, or may communicate with a terminal through a relay station. The terminal may communicate with a plurality of base stations using different technologies. For example, the terminal may communicate with a base station supporting an LTE network, may communicate with a base station supporting a 5G network, or may support dual connections to a base station in an LTE network and a base station in a 5G network. In embodiments of this application, an apparatus configured to implement a function of the network device may be a network device, or may be an apparatus, for example, a chip system, that can support the network device in implementing the function. The apparatus may be installed in the network device, or may be used together with the network device. In embodiments of this application, the chip system may include a chip, or may include a chip and another discrete component. In the method provided in embodiments of this application, the method provided in embodiments of this application is described by using an example in which the apparatus configured to implement the function of the network device is a network device.

A terminal, for example, the terminal 102, the terminal 103, or the terminal 104, in embodiments of this application is a device having a wireless transceiver function. The terminal may be deployed on land, where the deployment includes indoor or outdoor, and handheld or vehicle-mounted deployment, may be deployed on water (for example, on a ship), or may be deployed in air (for example, on a plane, a balloon, or a satellite). The terminal may also be referred to as a terminal device. The terminal device may be user equipment (user equipment, UE). The UE includes a handheld device, a vehicle-mounted device, a wearable device, or a computing device that has a wireless communication function. For example, the UE may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal may be a terminal, or may be an apparatus, for example, a chip system, that can support the terminal in implementing the function. The apparatus may be installed in the terminal, or may be used together with the terminal. In embodiments of this application, the chip system may include a chip, or may include a chip and another discrete component. In the method provided in embodiments of this application, the method provided in embodiments of this application is described by using an example in which the apparatus configured to implement the function of the terminal is a terminal.

By way of example, and not limitation, the terminal in this application may be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. For example, the wearable device is not only a hardware device, but also a device that implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.

In this application, the terminal may be a terminal in an internet of things (internet of things, IoT) system. IoT is an important component in development of future information technologies. A main technical feature of the IoT is to connect an object to a network by using a communication technology, to implement an intelligent network of human-machine interconnection and thing-thing interconnection. The terminal in this application may be a terminal in machine type communication (machine type communication, MTC).

The communication system 10 shown in FIG. 1 is merely used as an example, but is not intended to limit the technical solutions in this application. A person skilled in the art should understand that in a specific implementation process, the communication system 10 may further include another device, and a quantity of network devices and a quantity of terminals may alternatively be determined based on a specific requirement. This is not limited.

Optionally, each network element in FIG. 1 in this embodiment of this application, for example, the network device 101, the terminal 102, the terminal 103, or the terminal 104, may be a functional module in an apparatus. It may be understood that the functional module may be an element in a hardware device, for example, a communication chip or a communication component in a terminal or a network device, or may be a software functional module running on hardware or a virtualized function instantiated on a platform (for example, a cloud platform).

For example, each network element in FIG. 1 may be implemented by a communication apparatus 20 in FIG. 2. FIG. 2 is a schematic diagram of a hardware structure of the communication apparatus to which an embodiment of this application is applicable. The communication apparatus 20 includes at least one processor 201 and at least one communication interface 204, and is configured to implement the method provided in embodiments of this application. The communication apparatus 20 may further include a communication line 202 and a memory 203.

The processor 201 may be a general-purpose central processing unit (central processing unit, CPU), a microprocessor, an application-specific integrated circuit (application-specific integrated circuit, ASIC), or one or more integrated circuits configured to control program execution in the solutions in this application.

The communication line 202 may include a path, for example, a bus, for transmitting information between the foregoing components.

The communication interface 204 is configured to communicate with another device or a communication network. The communication interface 204 may be any apparatus such as a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 203 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in an instruction form or a data structure form and that can be accessed by a computer. However, the memory 203 is not limited thereto. The memory may exist independently, and is coupled to the processor 201 through the communication line 202. Alternatively, the memory 203 may be integrated with the processor 201. The memory provided in embodiments of this application may be usually non-volatile. The memory 203 is configured to store computer-executable instructions for performing the solutions in embodiments of this application, and the processor 201 controls execution. The processor 201 is configured to execute the computer-executable instructions stored in the memory 203, to implement the method provided in embodiments of this application.

The computer-executable instructions in embodiments of this application may also be referred to as application program code. This is not specifically limited in embodiments of this application.

Couplings in embodiments of this application are indirect couplings or communication connections between apparatuses, units, or modules, may be in electrical, mechanical, or other forms, and are used for information exchange between the apparatuses, units, or modules.

In an embodiment, the processor 201 may include one or more CPUs, for example, a CPU 0 and a CPU 1 in FIG. 2.

In an embodiment, the communication apparatus 20 may include a plurality of processors, for example, the processor 201 and a processor 207 in FIG. 2. Each of these processors may be a single-core (single-CPU) processor or a multi-core (multi-CPU) processor. The processor herein may be one or more devices, circuits, and/or processing cores configured to process data (for example, computer program instructions).

In an embodiment, the communication apparatus 20 may further include an output device 205 and/or an input device 206. The output device 205 is coupled to the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 is coupled to the processor 201, and may receive an input of a user in a plurality of manners. For example, the input device 206 may be a mouse, a keyboard, a touchscreen device, or a sensing device.

The communication apparatus 20 may be a general-purpose device or a dedicated device. A type of the communication apparatus 20 is not limited in embodiments of this application.

The following specifically describes the communication method in embodiments of this application with reference to FIG. 1 and FIG. 2.

It should be noted that names of messages between network elements, names of parameters in the messages, or the like in the following embodiments of this application are merely examples, and may be other names during specific implementation. This is not specifically limited in embodiments of this application.

To facilitate description of the technical solutions in embodiments of this application, in embodiments of this application, terms such as "first" and "second" may be used to distinguish between technical features with same or similar functions. The terms such as "first" and "second" do not limit a quantity and an execution sequence, and the terms such as "first" and "second" do not indicate a definite difference. In embodiments of this application, the term such as "example" or "for example" is used to represent an example, an illustration, or a description. Any embodiment or design scheme described with "example" or "for example" should not be explained as being more preferred or having more advantages than another embodiment or design scheme. Use of the term such as "example" or "for example" is intended to present a related concept in a specific manner for ease of understanding.

It should be noted that, in embodiments of this application, "/" may represent an "or" relationship between associated objects. For example, A/B may represent A or B. "And/or" may be used to describe a case in which three relationships exist between associated objects. For example, A and/or B may represent the following three cases: Only A exists, both A and B exist, and only B exists. A and B may be singular or plural. In addition, an expression similar to "at least one of A, B, and C" or "at least one of A, B, or C" is usually used to represent any one of the following: at least one A; at least one B; at least one C; at least one A and at least one B; at least one A and at least one C; at least one B and at least one C; and at least one A, at least one B, and at least one C. The foregoing uses three elements A, B, and C as an example to describe optional cases of the expression. When there are more elements in the expression, a meaning of the expression may be obtained according to the foregoing rule.

It may be understood that same steps or steps or technical features having a same function in embodiments of this application may be mutually referenced in different embodiments.

It may be understood that in embodiments of this application, a network device or a terminal may perform some or all steps in embodiments of this application. These steps are merely examples. In embodiments of this application, other steps or various variations of the steps may be further performed. In addition, the steps may be performed in a sequence different from a sequence presented in embodiments of this application, and not all the steps in embodiments of this application need to be performed.

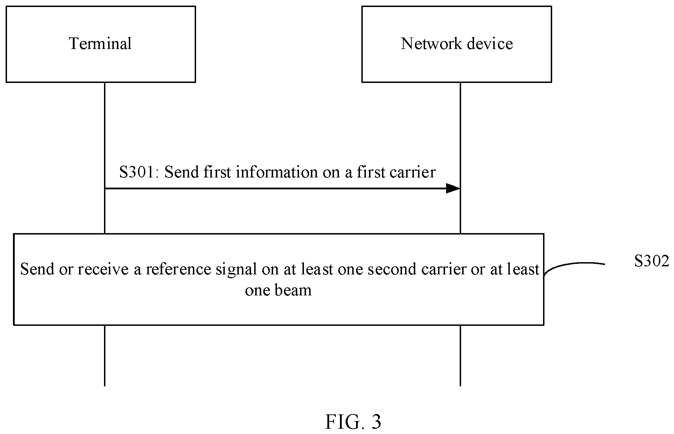

FIG. 3 shows a communication method according to an embodiment of this application. The communication method includes S301 and S302.

S301: A terminal sends first information to a network device on a first carrier. Correspondingly, the network device receives the first information from the terminal on the first carrier.

The terminal may be any terminal in FIG. 1, for example, the terminal 102, the terminal 103, or the terminal 104. The network device may be the network device 101 in FIG. 1.

In this embodiment of this application, the first information may be used to trigger measurement on at least one second carrier or at least one beam of at least one second carrier. For example, the first information is used to trigger channel measurement on the at least one second carrier or the at least one beam. In this embodiment of this application, triggering the measurement on the at least one second carrier or the at least one beam may be understood as: triggering sending or receiving of a reference signal on the at least one second carrier or the at least one beam; activating the at least one second carrier or the at least one beam; enabling the at least one second carrier or the at least one beam; or enabling the at least one second carrier or the at least one beam to be in an activated state or a transmission state. The triggering sending or receiving of a reference signal on the at least one second carrier or the at least one beam may be understood as: triggering the network device to send the reference signal on the at least one second carrier or the at least one beam; triggering the network device to receive the reference signal on the at least one second carrier or the at least one beam; indicating that the terminal is to detect/measure/receive the reference signal on the at least one second carrier or the at least one beam; or indicating that the terminal is to send the reference signal on the at least one second carrier or the at least one beam. The reference signal may be used to measure channel quality.

In this embodiment of this application, receiving may also be understood as detection, monitoring, or measurement.

In this embodiment of this application, the first information may be a scheduling request (scheduling request, SR), a buffer status report (buffer status report, BSR), an uplink reference signal, or reporting information. The reporting information may be transmitted by using radio resource control (radio resource control, RRC) signaling, the reporting information is carried in uplink control information (uplink control information, UCI), or the reporting information is included in an SR. Further, if the reporting information is carried in the UCI, the reporting information may be included in a first field in the UCI, where the first field is an existing field in the UCI; or the reporting information is included in a second field in the UCI, where the second field is a newly added field in the UCI. That the first field is an existing field in the UCI may be understood as that the first field is reused for the reporting information.

Optionally, when the reporting information is included in the first field in the UCI, and the first field is the existing field in the UCI, the terminal receives UCI reuse indication information from the network device in advance. The UCI reuse indication information indicates a reuse format, in other words, indicates that the first field is reused to carry the reporting information. Optionally, when the reporting information is included in the first field in the UCI, and the first field is the existing field in the UCI, the second field in the UCI indicates a UCI reuse format to the network device, in other words, indicates that the first field is reused to carry the reporting information. It may be understood that a length of the first field or the second field is not limited in this embodiment of this application.

In this embodiment of this application, the uplink reference signal may include a sounding reference signal (sounding reference signal, SRS), a demodulation reference signal (demodulation reference signal, DMRS), a preamble code (preamble code), or any newly defined sequence.

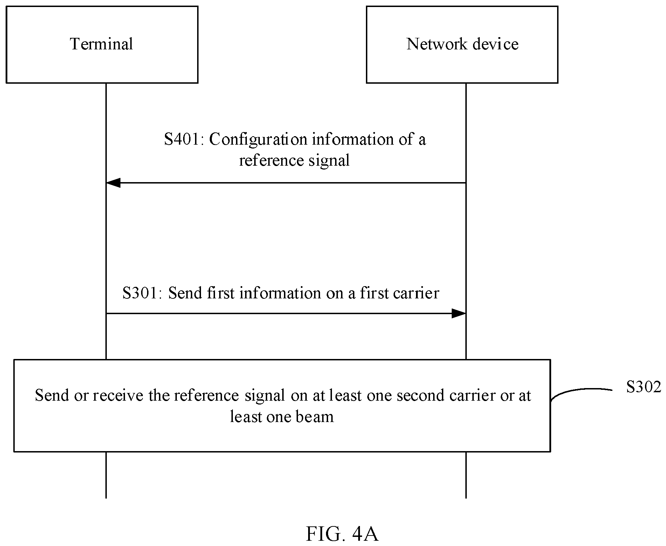

In this embodiment of this application, the reporting information may indicate to activate signal transmission on the at least one second carrier or in a frequency band in which the at least one second carrier is located. For example, the reporting information includes at least one of the following: an identifier of the at least one second carrier, an identifier of the frequency band in which the at least one second carrier is located, and an index of configuration information of the reference signal. The index of the configuration information of the reference signal may indicate the configuration information of the reference signal. If the reporting information includes the identifier of the at least one second carrier, the reporting information may indicate to activate signal transmission on the at least one second carrier. If the reporting information includes the identifier of the frequency band in which the at least one second carrier is located, the reporting information may indicate to activate signal transmission in the frequency band in which the at least one second carrier is located. If the reporting information includes the index of the configuration information of the reference signal, the reporting information may be further used to activate the configuration information of the reference signal. Optionally, the configuration information of the reference signal corresponds to the at least one second carrier. For descriptions of the configuration information of the reference signal, refer to the following descriptions in a method shown in FIG. 4A.

In a possible implementation, the first information or a resource used to transmit the first information meets at least one of the following: The first information or the resource used to transmit the first information corresponds to the at least one second carrier; the first information or the resource used to transmit the first information corresponds to the at least one beam; the first information or the resource used to transmit the first information corresponds to the frequency band in which the second carrier is located; the first information or the resource used to transmit the first information corresponds to a level to which a size of a BSR of to-be-sent data belongs; and the first information or the resource used to transmit the first information corresponds to a service feature of to-be-sent data. In this way, the terminal may indicate the at least one second carrier to the network device by using the first information or the resource used to transmit the first information, so that the network device determines to receive or send the reference signal on the at least one second carrier.

The resource used to transmit the first information may include at least one of a frequency domain resource, a time domain resource, a code domain resource, and a spatial domain resource. When the first information is the uplink reference signal, the code domain resource may be understood as a root sequence or a cyclic shift. The spatial domain resource includes a beam or an antenna port. In an example, when the first information is sent on a first beam, measurement on a second beam may be triggered. The first beam is any beam of the first carrier, and the second beam is any beam in the at least one beam of the at least one second carrier. There is an association relationship between the first beam and the second beam. Optionally, before S301, the terminal may receive beam-related information from the network device. The beam-related information may indicate the association relationship between the first beam and the second beam.

In this embodiment of this application, the service feature of the to-be-sent data may indicate at least one of the following: a quality of service (quality of service, QoS) level of the to-be-sent data, a priority of the to-be-sent data, and a service type of the to-be-sent data. The QoS level of the to-be-sent data may indicate at least one of the following: a delay requirement of the to-be-sent data, a reliability requirement of the to-be-sent data, and a throughput requirement of the to-be-sent data. The priority of the to-be-sent data may be represented by an index. A smaller value of the index indicates a higher priority of the to-be-sent data. The service type of the to-be-sent data may be an ultra reliable and low latency communication (ultra reliable and low latency communication, URLLC) service, an enhanced mobile broadband (enhanced mobile broadband, eMBB) service, or an MTC service.

It may be understood that if the first information or the resource used to transmit the first information corresponds to the at least one second carrier, the first information may be used to trigger measurement on the at least one second carrier. If the first information or the resource used to transmit the first information corresponds to the at least one beam, the first information may be used to trigger measurement on the at least one beam. If the first information or the resource used to transmit the first information corresponds to the frequency band in which the second carrier is located, the first information may be used to trigger measurement in the frequency band in which the second carrier is located. If the first information or the resource used to transmit the first information corresponds to the level to which the size of the BSR of the to-be-sent data belongs, the first information may be used to trigger measurement on a carrier on which the BSR can be transmitted, and the carrier on which the BSR can be transmitted includes the at least one second carrier. If the first information or the resource used to transmit the first information corresponds to the service feature of the to-be-sent data, the first information may be used to trigger measurement on a carrier that can meet the service feature, and the carrier that can meet the service feature includes the at least one second carrier.

Optionally, when the first information or the resource used to transmit the first information corresponds to at least one of the at least one second carrier, the at least one beam, and the frequency band in which the second carrier is located, the network device sends carrier status information of the at least one second carrier to the terminal. The carrier status information includes at least one of the following: load information of the at least one second carrier, a parameter related to load of the at least one second carrier, and a subcarrier spacing of the at least one second carrier. The parameter related to the load of the at least one second carrier may include a load factor and/or an available bandwidth. It may be understood that, after receiving the carrier status information, the terminal may determine, based on the carrier status information, the first information or the resource used to transmit the first information.

Optionally, when the first information or the resource used to transmit the first information corresponds to at least one of the at least one second carrier, the at least one beam, and the frequency band in which the second carrier is located, the terminal determines, based on location information, the first information or the resource used to transmit the first information. The location information includes location information of the terminal, or location information of the terminal and location information of the network device.

Optionally, the at least one second carrier corresponding to the first information or the resource of the first information may be a subset of a carrier to be activated by the network device. In other words, after receiving the first information, the network device may determine a to-be-activated carrier based on the first information, where the to-be-activated carrier may include the at least one second carrier. In addition to the at least one second carrier, the to-be-activated carrier may further include another carrier. If the to-be-activated carrier includes the at least one second carrier, a carrier to be detected by the terminal includes the at least one second carrier. If the to-be-activated carrier includes the at least one second carrier and the another carrier, carriers to be detected by the terminal also include the at least one second carrier and the another carrier.

Optionally, the at least one beam corresponding to the first information or the resource of the first information may be a subset of a beam to be activated by the network device. In other words, after receiving the first information, the network device may determine a to-be-activated beam based on the first information, where the to-be-activated beam may include the at least one beam. In addition to the at least one beam, the to-be-activated beam may further include another beam. If the to-be-activated beam includes the at least one beam, a beam to be detected by the terminal includes the at least one beam. If the to-be-activated beam includes the at least one beam and the another beam, beams to be detected by the terminal also include the at least one beam and the another beam.

It may be understood that, based on the foregoing descriptions, the following S302 may be replaced with: The terminal sends or receives the reference signal on a carrier in a carrier set or on a beam in a beam set. The carrier set may include the to-be-activated carrier, in other words, the carrier set may include the at least one second carrier, or the carrier set may include the at least one second carrier and the another carrier. The beam set may include the to-be-activated beam, in other words, the beam set may include the at least one beam of the at least one second carrier, or the beam set may include the at least one beam of the at least one second carrier and the another beam.

Further, the carrier in the carrier set or the beam in the beam set may cover a moving range of the terminal. In other words, the network device may determine the carrier set or the beam set based on the first information, so that the terminal does not exceed coverage of the carrier in the carrier set or the beam in the beam set in a moving process. In this way, when the terminal is in a moving state, the network device activates the carrier in the carrier set or the beam in the beam set, so that the terminal does not mistakenly report a beam with a good service during movement, and therefore service quality of service (quality of service, QoS) of the terminal is ensured.

In a possible implementation, before S301, the terminal obtains configuration information of a resource. For example, the terminal locally obtains the configuration information of the resource, or the terminal receives the configuration information of the resource from the network device. The configuration information of the resource may indicate a manner of triggering the measurement. The manner of triggering the measurement includes a manner of triggering the measurement by using the reporting information, and/or a manner of triggering the measurement by using a correspondence (for example, a correspondence between the first information or the resource used to transmit the first information and the at least one second carrier). If the manner of triggering the measurement includes the manner of triggering the measurement by using the reporting information, the first information is the reporting information. If the manner of triggering the measurement includes the manner of triggering the measurement by using the correspondence, the first information or the resource used to transmit the first information meets the foregoing condition. If the manner of triggering the measurement includes the manner of triggering the measurement by using the reporting information and the manner of triggering the measurement by using the correspondence, the first information is the reporting information, and the first information or the resource used to transmit the first information meets the foregoing condition.

In a possible implementation, that a terminal sends first information to a network device on a first carrier includes: When it is determined that there is to-be-sent data, the terminal sends the first information to the network device on the first carrier. Alternatively, when it is determined that there is an association relationship between the first carrier and the at least one second carrier, the terminal sends the first information to the network device on the first carrier. Alternatively, when a measurement reporting event is met, the terminal sends the first information to the network device on the first carrier.

In this application, the association relationship includes a quasi-colocation (quasi-colocation, QCL) association. For example, the QCL may include at least one of type A, type B, type C, and type D. For descriptions of type A, type B, type C, and type D, refer to explanations in an existing standard. Details are not described herein again.

A case in which it is determined that there is to-be-sent data may alternatively be replaced with a case in which there is an uplink requirement. The uplink requirement may be an uplink service requirement, or may be a requirement for requesting to send a measurement signal. The association relationship between the first carrier and the at least one second carrier may be indicated by the network device. For example, the network device indicates the association relationship between the first carrier and the at least one second carrier to the terminal by using fourth information in S501. After receiving the fourth information, the terminal sends the first information to the network device on the first carrier. In addition, the association relationship may alternatively be included in transmission configuration indication information (transmission configuration indication, TCI) for delivery. The measurement reporting event includes: Signal quality of the first carrier is less than a first threshold; signal quality of a third carrier is greater than or equal to a second threshold; signal quality of the first carrier is less than a first threshold and signal quality of a third carrier is greater than or equal to a second threshold; or a difference between signal quality of a third carrier and signal quality of the first carrier is greater than or equal to a third threshold. The third carrier is different from the first carrier. Optionally, the third carrier and the at least one second carrier belong to a same cell, or the third carrier and the at least one second carrier are time-frequency synchronized. Further, a frequency of the third carrier is the same as a frequency of the first carrier. In this case, the terminal or the network device does not need to perform inter-frequency measurement, so that measurement complexity of the terminal or the network device is reduced. Optionally, the first carrier and the third carrier belong to different network devices. The third carrier and the at least one second carrier belong to a same cell, the third carrier and the at least one second carrier are time-frequency synchronized, or the third carrier and the at least one second carrier are time-frequency synchronized and the third carrier and the at least one second carrier belong to a same cell.

In this embodiment of this application, the second carrier is different from the first carrier. The first carrier may be a carrier in a cell corresponding to the network device. For example, the first carrier is a carrier, of the network device, on which the terminal currently camps. The first carrier may be used to establish time-frequency synchronization between the terminal and the network device. In other words, the first carrier may be used by the terminal or the network device to perform synchronization measurement. The first carrier may be further used by the terminal to perform mobility measurement. The second carrier may be used by the terminal and the network device to perform channel measurement or data transmission. In other words, in this embodiment of this application, the synchronization measurement and the data transmission are separately performed on different carriers, in other words, the synchronization measurement and the data transmission are decoupled. In this case, resources suitable for the first carrier and the second carrier may be separately configured for the first carrier and the second carrier. In this way, synchronization measurement efficiency or mobility measurement efficiency can be improved, resource utilization and data transmission quality can be improved, and measurement overheads can be reduced. It may be understood that, in addition to the synchronization measurement or the mobility measurement, the first carrier may be further used for a service that does not require a large bandwidth, for example, cell identification or terminal positioning.

In a possible implementation, frequencies of the first carrier and the second carrier are different, so that different resources are separately configured for the first carrier and the second carrier. In an example, the data transmission usually requires a large quantity of consecutive frequency resources to improve communication quality between the terminal and the network device and user experience, but the synchronization measurement or the mobility measurement does not require a large quantity of consecutive frequency resources. Therefore, some scattered frequency resources that cannot be used for the data transmission may be allocated to the first carrier to improve the resource utilization, and large-bandwidth or consecutive frequency resources that can be used for the data transmission are allocated to the second carrier to improve the communication quality between the terminal and the network device and user experience.

Further, the frequency of the first carrier is lower than a frequency of the second carrier. In another example, when a signal is transmitted by using a frequency resource with a low frequency, a loss is small, and a signal transmission distance is long. Therefore, frequency resources with a low frequency may be allocated to the first carrier, so that one time of measurement can cover a large quantity of cells, measurement efficiency can be improved, and the measurement overheads can be reduced. However, most frequency resources with a low frequency have been configured for another service, and only some scattered frequency resources remain and are not applicable to the data transmission. In this way, frequency resources with a high frequency may be configured for the second carrier, and most of these frequency resources have not been used or have a large bandwidth. Therefore, a data transmission requirement can be met, and communication quality between the terminal and the network device and user experience can be improved.

It may be understood that the first carrier and the second carrier may be located in a same frequency band or may be located in different frequency bands. If the first carrier and the second carrier are located in a same frequency band, the frequency of the first carrier is different from the frequency of the second carrier. For example, the frequency of the first carrier is lower than the frequency of the second carrier. If the first carrier and the second carrier are located in different frequency bands, a frequency band in which the first carrier is located is lower than the frequency band in which the second carrier is located, or a main frequency of a frequency band in which the first carrier is located is lower than a main frequency of the frequency band in which the second carrier is located. The foregoing case 1 is used as an example. The first carrier may be located in a first frequency band, and the second carrier may be located in a second frequency band, where the first frequency band is lower than the second frequency band. The foregoing case 2 is used as an example. The first carrier may be located in a first frequency band, and the second carrier may be located in a second frequency band or a third frequency band, where the first frequency band is lower than the second frequency band or the third frequency band. Alternatively, the first carrier is located in a second frequency band, and the second carrier is located in a third frequency band, where the second frequency band is lower than the third frequency band.

In a possible implementation, the second carrier and the first carrier belong to a same cell, the second carrier and the first carrier are time-frequency synchronized, or the second carrier and the first carrier belong to a same cell and the second carrier and the first carrier are time-frequency synchronized. In other words, after performing synchronization measurement on the first carrier, the terminal or the network device may not perform synchronization measurement on the second carrier, and a synchronization measurement result on the first carrier may be used for the second carrier. In this way, the measurement overheads can be reduced, and power consumption of the terminal and the network device can be reduced.

In this embodiment of this application, performing synchronization on the first carrier includes detecting at least one of a synchronization signal block (synchronization signal block, SSB) and a tracking reference signal (tracking reference signal, TRS) on the first carrier. Through SSB synchronization detection on the first carrier, timing and/or time-frequency tracking are/is implemented. Therefore, coarse synchronization is completed, synchronization overheads of the terminal on the at least one second carrier are reduced, and power consumption of the terminal is reduced. Through SSB and TRS synchronization detection on the first carrier, timing and/or time-frequency tracking are/is implemented. Therefore, fine synchronization is completed, synchronization overheads of the terminal on the at least one second carrier are avoided, and power consumption of the terminal is further reduced.

S302: The terminal sends or receives the reference signal on the at least one second carrier or the at least one beam. Correspondingly, the network device receives or sends the reference signal on the at least one second carrier or the at least one beam.

It may be understood that if the first information is used to trigger the measurement on the at least one second carrier, the network device sends the reference signal on the at least one second carrier, and the terminal receives the reference signal on the at least one second carrier; or the terminal sends the reference signal on the at least one second carrier, and the network device receives the reference signal on the at least one second carrier. If the first information is used to trigger the measurement on the at least one beam, the network device sends the reference signal on the at least one beam, and the terminal receives the reference signal on the at least one beam; or the terminal sends the reference signal on the at least one beam, and the network device receives the reference signal on the at least one beam. If the first information is used to trigger the measurement in the frequency band in which the second carrier is located, the network device sends the reference signal in the frequency band, and the terminal receives the reference signal in the frequency band; or the terminal sends the reference signal in the frequency band, and the network device receives the reference signal in the frequency band. If the first information is used to trigger the measurement on the carrier on which the BSR can be transmitted, the network device sends the reference signal on the carrier, and the terminal receives the reference signal on the carrier; or the terminal sends the reference signal on the carrier, and the network device receives the reference signal on the carrier. If the first information is used to trigger the measurement on the carrier that can meet the service feature, the network device sends the reference signal on the carrier, and the terminal receives the reference signal on the carrier; or the terminal sends the reference signal on the carrier, and the network device receives the reference signal on the carrier.

In a possible implementation, if the terminal sends the reference signal on the at least one second carrier or the at least one beam, before S302, the terminal may send third indication information to the network device, to indicate that the terminal is to send the reference signal. The third indication information may be sent on the first carrier. Correspondingly, the network device may receive the third indication information from the terminal.

In a possible implementation, if the terminal receives the reference signal on the at least one second carrier or the at least one beam, before S302, the terminal may receive fourth indication information from the network device, where the fourth indication information indicates that the network device is to send the reference signal. The fourth indication information may be sent on the first carrier. Correspondingly, the network device may send the fourth indication information to the terminal.

In a possible implementation, after S302, the terminal performs data transmission with the network device. For example, the terminal determines a fourth carrier, and sends data to the network device on the fourth carrier. Correspondingly, the network device determines the fourth carrier, and receives the data from the terminal on the fourth carrier. The fourth carrier is one of the at least one second carrier. For example, the fourth carrier is a carrier with best signal quality in the at least one second carrier. In this way, the communication quality between the terminal and the network device can be improved. It may be understood that the fourth carrier may be separately determined by the network device and the terminal, or may be determined by one of the network device and the terminal and indicated to the other one after determining.

Optionally, before sending the data to the network device on the fourth carrier, the terminal may report, on the first carrier, a fact that the fourth carrier is a carrier with best signal quality, a fact that the fourth carrier is a selected carrier, or a fact that the fourth carrier is a carrier that meets signal quality. Meeting the signal quality may mean that signal quality is greater than or equal to a fourth threshold. The fourth threshold may be configured by the network device for the terminal, and is used by the terminal to select a carrier used for the data transmission from the at least one second carrier. The carrier used for the data transmission may be a carrier that meets the fourth threshold and has good signal quality.

In a possible implementation, after S302, the terminal stops sending or receiving the reference signal on the at least one second carrier or the at least one beam. Correspondingly, the network device stops receiving or sending the reference signal on the at least one second carrier or the at least one beam. In this way, the mobility measurement efficiency and the resource utilization can be improved, and the power consumption of the terminal and the network device can be reduced. That the terminal stops sending the reference signal on the at least one second carrier or the at least one beam may be understood as that the network device falls back to a first state, the network device is in the first state, or the network device enters the first state. That the terminal stops receiving the reference signal on the at least one second carrier or the at least one beam may be understood as that the terminal falls back to the first state, the terminal is in the first state, or the terminal enters the first state. The first state may mean that receiving is performed on the first carrier, or receiving does not need to be performed on the at least one second carrier. That receiving is performed on the first carrier may be understood as that detection/monitoring is performed on downlink information on the first carrier, where the downlink information includes, for example, at least one of a physical downlink control channel (physical downlink control channel, PDCCH), a channel state information reference signal (channel state information reference signal, CSI-RS), and a synchronization signal block (synchronization signal block, SSB). That receiving does not need to be performed on the at least one second carrier may be understood as that downlink information is not detected/monitored on the at least one second carrier.

Further, the terminal or the network device triggers the terminal to stop sending or receiving the reference signal on the at least one second carrier or the at least one beam. The following uses an example 1 to an example 3 as examples for description.

Example 1: That the terminal indicates the terminal to stop sending or receiving the reference signal on the at least one second carrier or the at least one beam is used as an example, and the terminal may send second information to the network device. The second information indicates the terminal to stop sending or receiving the reference signal on the at least one second carrier or the at least one beam. For example, the second information includes 1-bit indication information, and the 1-bit indication information indicates the terminal to stop sending or receiving the reference signal on the at least one second carrier or the at least one beam. Optionally, the second information may be included in UCI, or the second information is UCI. For another example, a resource used to transmit the second information indicates the terminal to stop sending or receiving the reference signal on the at least one second carrier or the at least one beam. It may be understood that after sending the second information, or in a process of sending the second information, the terminal stops sending or receiving the reference signal on the at least one second carrier or the at least one beam. After receiving the second information, the network device stops receiving or sending the reference signal on the at least one second carrier or the at least one beam.

Example 2: When the terminal does not perform data transmission on the at least one second carrier, if a time length in which the terminal camps on/keeps active/still performs receiving on the at least one second carrier is greater than or equal to a time length indicated by configuration information of a timer, the terminal stops sending or receiving the reference signal on the at least one second carrier or the at least one beam. The configuration information of the timer may be sent by the network device to the terminal. The configuration information of the timer may indicate a time length in which the terminal can camp on the at least one second carrier when no data transmission is performed on the at least one second carrier. The time length indicated by the configuration information of the timer may also be understood as a time length in which the terminal keeps active on the at least one second carrier, or a time length in which the terminal performs receiving on the at least one second carrier. In other words, the configuration information of the timer may be used to configure the timer for the terminal. When the timer expires, the terminal stops sending or receiving the reference signal on the at least one second carrier or the at least one beam. Similarly, when the terminal does not perform data transmission on the at least one second carrier, if the time length in which the terminal camps on/keeps active/still performs receiving on the at least one second carrier is greater than or equal to the time length indicated by the configuration information of the timer, the network device stops sending or receiving the reference signal on the at least one second carrier or the at least one beam. A case in which no data transmission is performed includes that there is no scheduling request, there is no data for transmission, or the timer is triggered by the network device to start timing. The timer is started when the terminal has no scheduling request or no data for transmission on the at least one second carrier. Alternatively, startup of the timer is triggered by the network device.

Example 3: That the network device indicates the terminal to stop sending or receiving the reference signal on the at least one second carrier or the at least one beam is used as an example, and the terminal may receive third information from the network device. The third information indicates the terminal to stop sending or receiving the reference signal on the at least one second carrier or the at least one beam. For example, the third information includes 1-bit indication information, and the 1-bit indication information indicates the terminal to stop sending or receiving the reference signal on the at least one second carrier or the at least one beam. Optionally, the third information may be included in DCI, or the third information is DCI. For another example, a resource used to transmit the third information indicates the terminal to stop sending or receiving the reference signal on the at least one second carrier or the at least one beam. It may be understood that after sending the third information or starting from a slot in which the network device sends the third information, the network device stops sending or receiving the reference signal on the at least one second carrier or the at least one beam. After receiving the third information or starting from a slot in which the terminal receives the third information, the terminal stops receiving or sending the reference signal on the at least one second carrier or the at least one beam.

It may be understood that, for detection of scheduling information, the terminal may perform scheduling detection on the first carrier, the terminal may perform scheduling detection on the second carrier, or the terminal may perform scheduling detection on both the first carrier and the second carrier. Optionally, after the second carrier is activated, and before the terminal stops sending or receiving the reference signal on the at least one second carrier or the at least one beam, the terminal performs scheduling detection. Optionally, before the second carrier is activated, the terminal may monitor, on the first carrier, control information from the network device.

Based on the method shown in FIG. 3, the terminal may send the first information to the network device on the first carrier, to trigger the measurement on the at least one second carrier or the at least one beam of the at least one second carrier. Subsequently, the terminal may send the reference signal to the network device or receive the reference signal from the network device on the at least one second carrier or the at least one beam. In this manner, sending of reference signals on some carriers or some beams may be triggered based on a requirement. The terminal does not need to receive or send a reference signal on each configured carrier and/or beam or each activated carrier and/or beam, and the network device does not need to send or receive the reference signal on each carrier and/or beam configured for the terminal or each activated carrier and/or beam. This can reduce communication overheads and the power consumption of the terminal and the network device.

The actions of the terminal or the network device in S301 and S302 may be performed by the processor 201 in the communication apparatus 20 shown in FIG. 2 by invoking the application program code stored in the memory 203. This is not limited in this embodiment of this application.

Optionally, in a possible implementation of the method shown in FIG. 3, the network device may send the configuration information of the reference signal to the terminal, so that the terminal may send or receive the reference signal on the at least one second carrier based on the configuration information of the reference signal. Specifically, as shown in FIG. 4A, the method shown in FIG. 3 further includes S401.

S401: The network device sends the configuration information of the reference signal to the terminal. Correspondingly, the terminal receives the configuration information of the reference signal from the network device.

In a possible implementation, the network device sends the configuration information of the reference signal to the terminal on the first carrier. Correspondingly, the terminal receives, on the first carrier, the configuration information of the reference signal from the network device.

The configuration information of the reference signal may be understood as configuration information used to measure the reference signal. The configuration information of the reference signal may indicate at least one of the following: at least one type of reference signal, a reference signal on the at least one second carrier, and at least one measurement time period (gap) of the reference signal. The reference signal may be used to measure channel quality. Channel quality measurement may be layer 1 measurement. The at least one type of reference signal includes the reference signal on the at least one second carrier. The measurement time period may be used by the terminal or the network device to perform channel measurement on the second carrier. Further, in the foregoing measurement time period, the terminal or the network device may perform channel measurement. In addition, the terminal does not perform other data receiving, so that accuracy of the channel measurement is improved. Similarly, the network device does not perform other signal transmission or data transmission, so that the accuracy of the channel measurement is improved. Optionally, the configuration information of the reference signal may further indicate a quantity of transmission times of the reference signal.

It may be understood that, if the configuration information of the reference signal indicates the at least one type of reference signal, the reference signal in S302 is a reference signal in the at least one type of reference signal. If the configuration information of the reference signal indicates the reference signal on the at least one second carrier, the reference signal in S302 is the reference signal on the at least one second carrier. If the configuration information of the reference signal indicates the at least one measurement time period, the terminal sends or receives the reference signal on the at least one second carrier or the at least one beam in a first measurement time period. Correspondingly, the network device receives or sends the reference signal on the at least one second carrier or the at least one beam in the first measurement time period. The first measurement time period is one of the at least one measurement time period.

In a possible implementation, the configuration information of the reference signal is semi-persistent scheduling (semi-persistent scheduling, SPS) information. In this case, the configuration information of the reference signal may further indicate at least one of the following: an SPS time domain start location, an offset of the time domain start location, an SPS duration length, an SPS periodicity, and an SPS interval.

It may be understood that the configuration information of the reference signal may indicate at least one set or at least one group of configurations. For example, the configuration information of the reference signal indicates two sets of configurations. A first set of configurations indicates a reference signal 1 on the second carrier and a measurement time period 1 of the reference signal 1, and a second set of configurations indicates a reference signal 2 and a measurement time period 2 of the reference signal 2.

Further, sets of configurations or groups of configurations are different. A difference may be reflected as at least one of the following: In the sets of configurations or the groups of configurations, periodicities of reference signals are different, sending manners of the reference signals are different, transmit power of the reference signals is different, and measurement time periods of the reference signals are different. The sending manner of the reference signal may include periodic sending or aperiodic sending. When the configuration information of the reference signal indicates one set or one group of configurations, the configuration information of the reference signal may indicate a reference signal 1 on the second carrier and a measurement time period of the reference signal 1. When the configuration information of the reference signal indicates a plurality of sets or a plurality of groups of configurations, for example, the configuration information of the reference signal indicates three sets or three groups of configurations, the configuration information of the reference signal may indicate a reference signal 2, a measurement time period of the reference signal 2, a reference signal 3, a measurement time period of the reference signal 3, a reference signal 4, and a measurement time period of the reference signal 4. A sending manner of the reference signal 2 is aperiodic sending, a sending manner of the reference signal 3 and a sending manner of the reference signal 4 are periodic sending, a periodicity of the reference signal 3 is 10 milliseconds, and a periodicity of the reference signal 4 is 8 milliseconds. The measurement time period of the reference signal 2, the measurement time period of the reference signal 3, and the measurement time period of the reference signal 4 may be the same or may be different. It may be understood that a quantity of reference signals in each set or each group of configurations is not limited in this embodiment of this application. In other words, each set or each group of configurations may include one reference signal or may include a plurality of reference signals. The plurality of reference signals may also be referred to as a reference signal set.

Optionally, the network device may determine, based on a quantity of pieces of first information received in S3 01 or signal strength of the first information, a periodicity of the reference signal indicated by the configuration information of the reference signal.

In an example, when the quantity of pieces of first information is greater than or equal to a first value, it indicates that there are a large quantity of terminals that have a measurement requirement. In this case, the network device may determine that the periodicity of the reference signal indicated by the configuration information of the reference signal is less than or equal to a second value, to better serve each terminal. When the quantity of pieces of first information is less than the first value, it indicates that there are a small quantity of terminals that have a measurement requirement. In this case, the network device may determine that the periodicity of the reference signal indicated by the configuration information of the reference signal is greater than the second value, to reduce network power consumption as much as possible when it is ensured that the terminal having the measurement requirement is served.

In another example, when the signal strength of the first information is greater than or equal to a third value, it indicates that signal strength between the terminal and the network device is good or a distance between the terminal and the network device is short. In this case, the network device may determine that the periodicity of the reference signal indicated by the configuration information of the reference signal is greater than or equal to a fourth value, and/or power of a reference signal sent by the network device is less than or equal to a fifth value, to reduce network power consumption as much as possible when it is ensured that the terminal having a requirement is served. When the signal strength of the first information is less than the third value, it indicates that the signal strength between the terminal and the network device is poor or the distance between the terminal and the network device is long. In this case, the network device may determine that the periodicity of the reference signal indicated by the configuration information of the reference signal is less than the fourth value, and/or the power of the reference signal sent by the network device may be greater than the fifth value, to ensure that the terminal can be effectively served. It may be understood that, when a value of the power of the reference signal sent by the network device is variable, the network device can explicitly or implicitly notify the terminal.

Optionally, when at least one terminal corresponds to same first information, the network device may determine, based on signal strength of the first information, the periodicity of the reference signal indicated by the configuration information of the reference signal and/or the power of the reference signal sent by the network device. That at least one terminal corresponds to same first information may be understood as that one or more terminals correspond to same first information. In other words, the one or more terminals may use a resource of the same first information, or the one or more terminals may use a sequence of the same first information. The sequence includes a root sequence or a cyclic shift.

For example, when the signal strength of the first information is greater than or equal to a sixth value, it indicates that there are a large quantity of terminals that have a measurement requirement. In this case, the network device determines that the periodicity of the reference signal indicated by the configuration information of the reference signal is less than or equal to a seventh value, and/or the power of the reference signal sent by the network device is greater than or equal to an eighth value, to ensure that the terminal can be effectively served. When the signal strength of the first information is less than the sixth value, it indicates that there are a small quantity of terminals that have a measurement requirement. In this case, the network device determines that the periodicity of the reference signal indicated by the configuration information of the reference signal is greater than the seventh value, and/or the power of the reference signal sent by the network device is less than the eighth value, to reduce network power consumption as much as possible when it is ensured that the terminal having the measurement requirement is served.

It should be noted that FIG. 4A shows only a case in which S401 is performed before S301. During actual application, S401 may be performed before S301, or may be performed between S301 and S302. This is not limited.

It may be understood that if S401 is performed before S301, the first information may further indicate that the configuration information of the reference signal takes effect. For example, the first information includes an identifier of the configuration information of the reference signal. After receiving the first information, the network device may start to use the configuration information of the reference signal, and receive or send the reference signal on the at least one second carrier based on the configuration information of the reference signal. If S401 is performed between S301 and S302, the first information may further indicate to send the configuration information of the reference signal. After receiving the first information, the network device may perform S401, and then receive or send the reference signal on the at least one second carrier based on the configuration information of the reference signal.

It should be noted that the measurement time period in this embodiment of this application is different from a measurement time period in the existing standard. In the existing standard, after the network device configures the measurement time period, the terminal periodically performs corresponding measurement based on the measurement time period, and does not receive data information or control information during the measurement time period. Consequently, unnecessary interruption is caused. In this embodiment of this application, if S401 is performed before S301, even if the network device configures the measurement time period, the terminal does not need to perform corresponding measurement based on the measurement time period. Instead, the terminal performs corresponding measurement based on the measurement time period only after the configuration information of the reference signal is activated. In other words, the measurement time period is preconfigured information. In this case, the first information may be used to activate the configuration information of the reference signal. In addition to the first information, the network device may alternatively send other information to the terminal, to activate the configuration information of the reference signal. For example, the network device sends DCI to the terminal, and the DCI or an information element or a field in the DCI may be used to activate the configuration information of the reference signal. The DCI may be scheduling DCI. If S401 is performed between S301 and S302, the measurement time period is configured by the network device triggered by the terminal. In other words, the network device configures the measurement time period only when the terminal requires the measurement time period. In this embodiment of this application, the measurement time period is configured in advance but used only after being activated, or is configured only when the measurement time period needs to be used. Therefore, the unnecessary interruption caused by the measurement time period in the existing standard can be reduced.

In this embodiment of this application, that the configuration information of the reference signal takes effect may be understood as that the configuration information of the reference signal is activated for use, or a configuration in the configuration information of the reference signal is opened/enabled. For example, if the configuration information of the reference signal indicates the at least one type of reference signal, that the configuration information of the reference signal takes effect may be understood as that the reference signal in the at least one type of reference signal is activated and sent. For another example, if the configuration information of the reference signal indicates the reference signal on the at least one second carrier, that the configuration information of the reference signal takes effect may be understood as that the terminal receives or sends the reference signal on the at least one second carrier.

Optionally, in this embodiment of this application, in addition to indicating, by using the first information, that the configuration information of the reference signal takes effect, the network device may also indicate that the configuration information of the reference signal takes effect. For example, the network device sends first indication information to the terminal, and correspondingly, the terminal receives the first indication information from the network device. The first indication information may indicate that the configuration information of the reference signal takes effect. Further, the first indication information may indicate that a communication mode in which synchronization measurement is decoupled from data transmission is used. In this case, the terminal determines to communicate with the network device in the communication mode in which synchronization measurement is decoupled from data transmission. That a communication mode in which synchronization measurement is decoupled from data transmission is used may be understood as that the communication mode in which synchronization measurement is decoupled from data transmission is activated. When the communication mode in which synchronization measurement is decoupled from data transmission is used, the terminal performs step S301.

In a possible implementation, after S302, the network device sends second indication information to the terminal, and correspondingly, the terminal receives the second indication information from the network device. The second indication information may indicate that the configuration information of the reference signal does not take effect. That the configuration information of the reference signal does not take effect may be understood as that the configuration information of the reference signal is not activated for use, or a configuration in the configuration information of the reference signal is closed/disabled. For example, if the configuration information of the reference signal indicates the at least one type of reference signal, that the configuration information of the reference signal does not take effect may be understood as that the reference signal in the at least one type of reference signal is not activated for sending/deactivated/stopped for sending. For another example, if the configuration information of the reference signal indicates the reference signal on the at least one second carrier, that the configuration information of the reference signal does not take effect may be understood as that the terminal stops receiving or sending the reference signal on the at least one second carrier.

Optionally, in addition to the method shown in FIG. 4A, S401 may alternatively be implemented as an independent embodiment, so that the terminal may send or receive the reference signal on the at least one second carrier based on the configuration information of the reference signal. For example, a communication method provided in this embodiment of this application may include: The network device sends the configuration information of the reference signal to the terminal on the first carrier, and receives or sends the reference signal on the at least one second carrier based on the configuration information of the reference signal after the configuration information of the reference signal is activated or the configuration information of the reference signal takes effect. Correspondingly, the terminal receives, on the first carrier, the configuration information of the reference signal from the network device, and sends or receives the reference signal on the at least one second carrier based on the configuration information of the reference signal after the configuration information of the reference signal is activated or the configuration information of the reference signal takes effect. The configuration information of the reference signal may be activated or validated by using the first information or the first indication information. For descriptions of receiving or sending the reference signal by the network device on the at least one second carrier and descriptions of sending or receiving the reference signal by the terminal on the at least one second carrier, refer to corresponding descriptions in the method shown in FIG. 3.

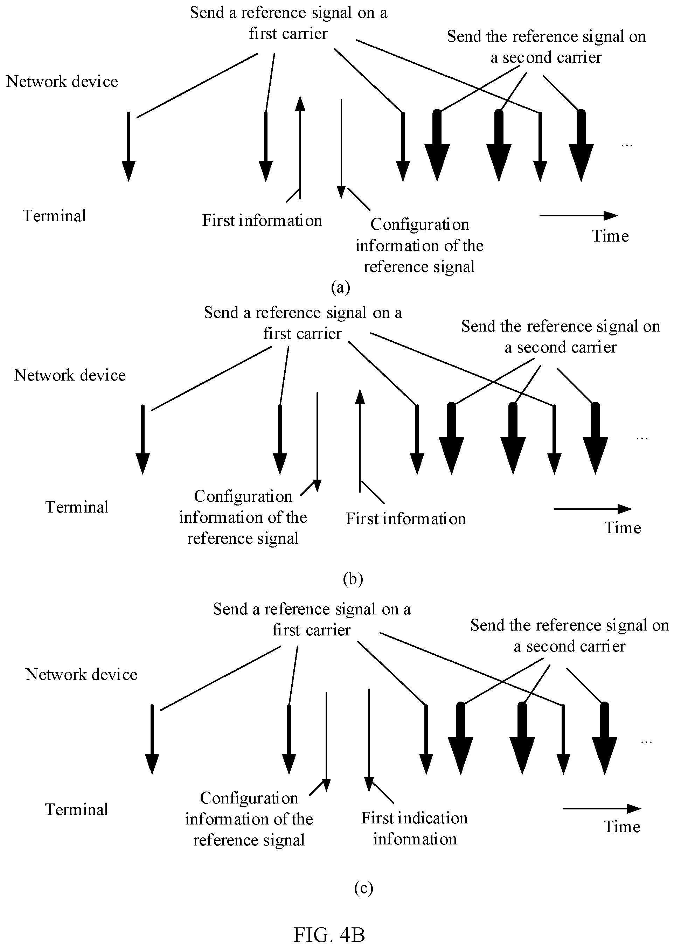

For example, as shown in (a) in FIG. 4B, the network device may send a reference signal to the terminal on the first carrier, and send the configuration information of the reference signal to the terminal after receiving the first information from the terminal. Subsequently, the network device may send the reference signal to the terminal on the second carrier based on the configuration information of the reference signal. Correspondingly, the terminal may receive the reference signal from the network device on the first carrier, send the first information to the network device, and receive the reference signal on the second carrier based on the configuration information of the reference signal after receiving the configuration information of the reference signal from the network device.

For example, as shown in (b) in FIG. 4B, the network device may send a reference signal to the terminal on the first carrier, send the configuration information of the reference signal to the terminal, and determine, after receiving the first information from the terminal, that the configuration information of the reference signal is activated or takes effect. Subsequently, the network device may send the reference signal to the terminal on the second carrier based on the configuration information of the reference signal. Correspondingly, the terminal may receive the reference signal from the network device on the first carrier, and receive the configuration information of the reference signal from the network device. Subsequently, the terminal may send the first information to the network device, to indicate that the configuration information of the reference signal is activated or takes effect, and receive the reference signal on the second carrier based on the configuration information of the reference signal.

For example, as shown in (c) in FIG. 4B, the network device may send a reference signal to the terminal on the first carrier. After sending the configuration information of the reference signal to the terminal, the network device may indicate, by using the first indication information, that the configuration information of the reference signal is activated or takes effect. Subsequently, the network device may send the reference signal to the terminal on the second carrier based on the configuration information of the reference signal. Correspondingly, the terminal may receive the reference signal from the network device on the first carrier, receive the configuration information of the reference signal from the network device, and receive the first indication information of the network device. Subsequently, the terminal may receive the reference signal on the second carrier based on the configuration information of the reference signal. After receiving the first indication information of the network device, the terminal determines that the configuration information of the reference signal is activated or takes effect.

Based on the method shown in FIG. 4A, before sending or receiving the reference signal on the at least one second carrier or the at least one beam, the terminal may receive the configuration information of the reference signal from the network device. In this way, the terminal may send or receive the reference signal on the at least one second carrier based on the configuration information of the reference signal.

The actions of the terminal or the network device in S401 may be performed by the processor 201 in the communication apparatus 20 shown in FIG. 2 by invoking the application program code stored in the memory 203. This is not limited in this embodiment of this application.

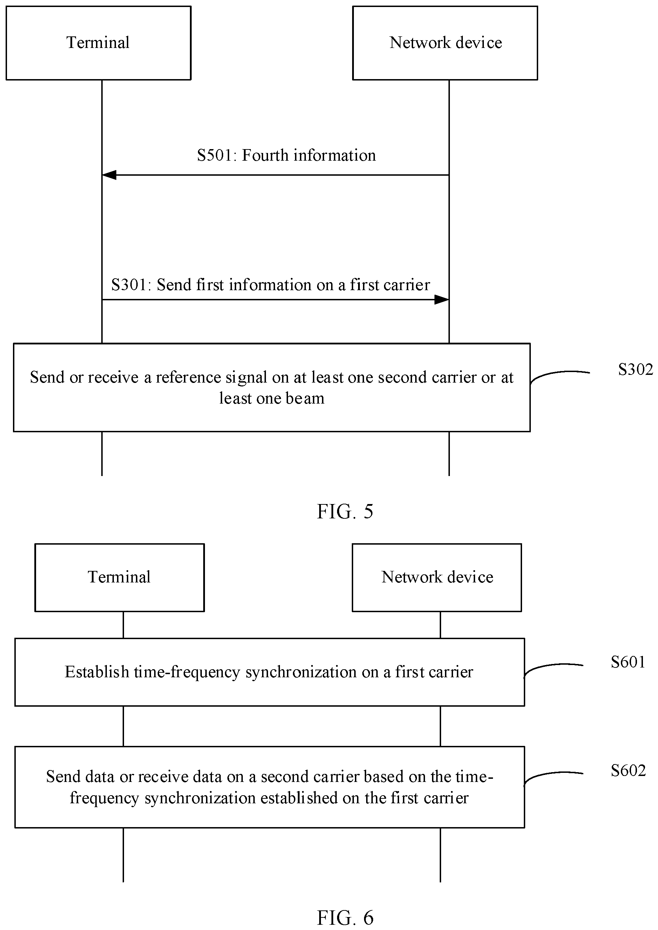

Optionally, in a possible implementation of the method shown in FIG. 3, the network device may send the fourth information to the terminal, to indicate at least one of the first carrier, the at least one second carrier, and the association relationship between the first carrier and the at least one second carrier to the terminal, or indicate the terminal to communicate with the network device in a communication mode in which synchronization measurement is decoupled from data transmission. Specifically, as shown in FIG. 5, the method shown in FIG. 3 further includes S501. It should be understood that S501 may alternatively be included in the method shown in FIG. 4A.

S501: The network device sends the fourth information to the terminal. Correspondingly, the terminal receives the fourth information from the network device.

In this embodiment of this application, the fourth information may indicate that the communication mode in which synchronization measurement is decoupled from data transmission is used. Alternatively, the fourth information may indicate at least one of the following: the first carrier, the at least one second carrier, and the association relationship between the first carrier and the at least one second carrier. The association relationship between the first carrier and the at least one second carrier may be understood as that the synchronization measurement is performed on the first carrier, and the data transmission is performed on the at least one second carrier.

It may be understood that if the fourth information indicates the first carrier, the fourth information may further indicate at least one of the frequency band in which the first carrier is located and the frequency of the first carrier. If the fourth information indicates the at least one second carrier, the fourth information may further indicate at least one of the frequency band in which the at least one second carrier is located and the frequency of the at least one second carrier. If the fourth information indicates the association relationship between the first carrier and the at least one second carrier, the fourth information may further indicate at least one of the frequency band in which the first carrier is located, the frequency of the first carrier, the frequency band in which the at least one second carrier is located, and the frequency of the at least one second carrier.

In a possible implementation, at least one item indicated by the fourth information is determined based on capability information of the terminal. The capability information of the terminal indicates at least one of the following: a frequency band supported by the terminal, a quantity of carriers that can be used by the terminal in the frequency band supported by the terminal, a moving speed of the terminal, a location of the terminal, and signal quality of the terminal on the first carrier.

For example, if the capability information of the terminal indicates the frequency band supported by the terminal, the first carrier and the at least one second carrier are located in the frequency band supported by the terminal. For example, the terminal supports a first frequency band and a second frequency band. The first carrier may be located in the first frequency band, and the at least one second carrier may be located in the second frequency band. For example, the terminal supports a first frequency band, a second frequency band, and a third frequency band. The first carrier may be located in the first frequency band, and the at least one second carrier may be located in the second frequency band or the third frequency band. Alternatively, the first carrier may be located in the first frequency band, a part of second carriers are located in the second frequency band, and the other part of second carriers are located in the third frequency band.

For example, the capability information of the terminal indicates that a quantity of carriers that can be used by the terminal in the first frequency band is 1, and a quantity of carriers that can be used by the terminal in the second frequency band is 2. In this case, the first carrier is located in the first frequency band, a quantity of first carriers is 1, the second carrier is located in the second frequency band, and a quantity of second carriers is less than or equal to 2.

For example, the capability information of the terminal indicates the moving speed of the terminal. If the moving speed of the terminal is greater than or equal to a first threshold, the frequency of the first carrier is less than or equal to a first frequency, the frequency of the at least one second carrier is less than or equal to a second frequency, or the frequency of the first carrier is less than or equal to a first frequency and the frequency of the at least one second carrier is less than or equal to a second frequency. If the moving speed of the terminal is less than the first threshold, the frequency of the first carrier is greater than a third frequency, the frequency of the at least one second carrier is greater than a fourth frequency, or the frequency of the first carrier is greater than a third frequency and the frequency of the at least one second carrier is greater than a fourth frequency. In other words, a higher moving speed of the terminal indicates a smaller frequency of the first carrier and a smaller frequency of the at least one second carrier, to expand coverage of the first carrier and the at least one second carrier. A lower moving speed of the terminal indicates a larger frequency of the first carrier and a larger frequency of the at least one second carrier, to reduce coverage of the first carrier and the at least one second carrier. The first frequency and the third frequency may be the same or may be different. The second frequency and the fourth frequency may be the same or may be different.

For example, the capability information of the terminal indicates the location of the terminal. If the terminal is located at an edge of a cell, the frequency of the first carrier is less than or equal to a fifth frequency, the frequency of the at least one second carrier is less than or equal to a sixth frequency, or the frequency of the first carrier is less than or equal to a fifth frequency and the frequency of the at least one second carrier is less than or equal to a sixth frequency. If the terminal is located near the network device, the frequency of the first carrier is greater than a seventh frequency, the frequency of the at least one second carrier is greater than an eighth frequency, or the frequency of the first carrier is greater than a seventh frequency and the frequency of the at least one second carrier is greater than an eighth frequency. The fifth frequency and the seventh frequency may be the same or may be different. The sixth frequency and the eighth frequency may be the same or may be different. In other words, a case in which the terminal is located at the edge of the cell indicates a smaller frequency of the first carrier and a smaller frequency of the at least one second carrier, to expand coverage of the first carrier and the at least one second carrier. A case in which the terminal is located near the network device indicates a larger frequency of the first carrier and a larger frequency of the at least one second carrier, to reduce coverage of the first carrier and the at least one second carrier.

For example, the capability information of the terminal indicates the signal quality of the terminal on the first carrier. If the signal quality on the first carrier is greater than or equal to the first threshold, the fourth information indicates at least one of the first carrier, the at least one second carrier, and the association relationship between the first carrier and the at least one second carrier. If the signal quality on the first carrier is less than the first threshold, the fourth information does not indicate at least one of the first carrier, the at least one second carrier, and the association relationship between the first carrier and the at least one second carrier, and the fourth information indicates at least one of the third carrier, at least one fifth carrier, and an association relationship between the third carrier and the at least one fifth carrier. Subsequently, the terminal may camp on the third carrier. The third carrier is different from the first carrier, and the signal quality of the third carrier is greater than or equal to the second threshold. The relationship between the third carrier and the at least one fifth carrier is similar to the relationship between the first carrier and the at least one second carrier. Therefore, for details, refer to the descriptions of the first carrier and the at least one second carrier. Details are not described herein again.

For example, the capability information of the terminal indicates the moving speed of the terminal and a quantity of carriers that can be used by the terminal in a second frequency band. If the moving speed of the terminal is greater than or equal to a first threshold, and the quantity of carriers that can be used by the terminal in the second frequency band is 5, the second carrier is located in the second frequency band, and a quantity of second carriers is 2. If the moving speed of the terminal is less than the first threshold, and the quantity of carriers that can be used by the terminal in the second frequency band is 5, the second carrier is located in the second frequency band, and the quantity of second carriers is 4. In other words, a higher moving speed of the terminal indicates a smaller quantity of second carriers. In this case, the terminal is easily transited to a neighboring network device. In addition, activated carriers of a serving base station are reduced, and the network power consumption can be reduced. A lower moving speed of the terminal indicates a larger quantity of second carriers. In this case, sufficient user experience on these carriers can be ensured, in other words, user experience can be improved.

In this application, in a high frequency case, a carrier may also be understood as a beam.

For example, the capability information of the terminal indicates the moving speed of the terminal. If the moving speed of the terminal is greater than or equal to a first threshold, the configured fourth information meets at least one of the following: The frequency of the first carrier is less than or equal to a first frequency, the frequency of the at least one second carrier is less than or equal to a second frequency, and a quantity of second beams of the at least one second carrier is greater than or equal to a fifth threshold. If the moving speed of the terminal is less than the first threshold, the configured fourth information meets at least one of the following: The frequency of the first carrier is greater than a third frequency, the frequency of the at least one second carrier is greater than a fourth frequency, and a quantity of at least one second beam is less than the fifth threshold. In other words, a higher moving speed of the terminal indicates a smaller frequency of the first carrier and a smaller frequency of the at least one second carrier, to expand coverage of the first carrier and the at least one second carrier. A higher moving speed of the terminal indicates more candidate beams, to prevent the terminal from exceeding coverage of these beams. A lower moving speed of the terminal indicates a larger frequency of the first carrier and a larger frequency of the at least one second carrier, to reduce coverage of the first carrier and the at least one second carrier. A lower moving speed of the terminal indicates fewer candidate beams, to reduce power consumption of the network device on corresponding beams while ensuring that the terminal can be covered by these beams. The first frequency and the third frequency may be the same or may be different. The second frequency and the fourth frequency may be the same or may be different.

In a possible implementation, before S501, the network device receives the capability information of the terminal from the terminal, so that the network device determines at least one item indicated by the fourth information. Correspondingly, the terminal sends the capability information of the terminal to the network device.

Based on the method shown in FIG. 5, the network device may send the fourth information to the terminal, to indicate at least one of the first carrier, the at least one second carrier, and the association relationship between the first carrier and the at least one second carrier to the terminal, or indicate the terminal to communicate with the network device in the communication mode in which synchronization measurement is decoupled from data transmission.

The actions of the terminal or the network device in S501 may be performed by the processor 201 in the communication apparatus 20 shown in FIG. 2 by invoking the application program code stored in the memory 203. This is not limited in this embodiment of this application.

It may be understood that the method provided in embodiments of this application may have a plurality of description manners, in other words, may be described from a plurality of perspectives. To facilitate understanding of the method provided in embodiments of this application, the following uses methods shown in FIG. 6 to FIG. 8 as examples to describe the method provided in embodiments of this application in description manners different from those in the methods shown in FIG. 3 to FIG. 5. For descriptions of steps or technical features in the methods shown in FIG. 6 to FIG. 8, refer to corresponding descriptions in the methods shown in FIG. 3 to FIG. 5. The methods shown in FIG. 6 to FIG. 8 may be further combined with one or more steps (for example, S302, S401, and S502) in the methods shown in FIG. 3 to FIG. 5. This is not limited.

FIG. 6 shows another communication method according to an embodiment of this application. The communication method includes S601 and S602.

S601: A terminal establishes time-frequency synchronization with a network device on a first carrier.

For descriptions of the terminal, the first carrier, and the network device, refer to the descriptions in S301.

In this embodiment of this application, that a terminal establishes time-frequency synchronization with a network device on a first carrier may be understood as that the terminal or the network device performs synchronization measurement on the first carrier, so that the terminal is time-frequency synchronized with the network device.

Correspondingly, the network device establishes time-frequency synchronization with the terminal on the first carrier.

S602: The terminal sends data to the network device or receives data from the network device on a second carrier based on the time-frequency synchronization established with the network device on the first carrier.

The first carrier and the second carrier are time-frequency synchronized. For further descriptions of the second carrier, refer to the descriptions in S301.

In this embodiment of this application, S602 may be understood as that the terminal may send the data to the network device or receive the data from the network device on the second carrier based on the time-frequency synchronization established on the first carri er.

Correspondingly, the network device receives the data from the terminal or sends the data to the terminal on the second carrier based on the time-frequency synchronization established with the terminal on the first carrier.

Based on the method shown in FIG. 6, after establishing the time-frequency synchronization on the first carrier, the terminal may send the data to the network device or receive the data from the network device on the second carrier based on the time-frequency synchronization established on the first carrier. In this way, the terminal or the network device may not need to establish time-frequency synchronization on the second carrier, so that measurement overheads are reduced, and power consumption of the terminal and the network device is reduced.

The actions of the terminal or the network device in S601 and S602 may be performed by the processor 201 in the communication apparatus 20 shown in FIG. 2 by invoking the application program code stored in the memory 203. This is not limited in this embodiment of this application.

In this application, "based on" may be understood as "on a premise of".

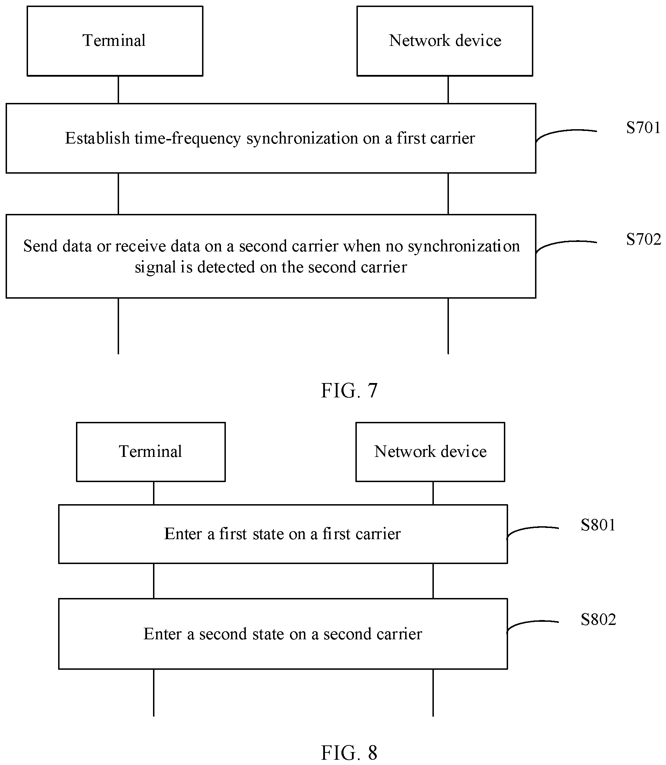

FIG. 7 shows another communication method according to an embodiment of this application. The communication method includes S701 and S702.

S701: A terminal establishes time-frequency synchronization with a network device on a first carrier.

For descriptions of S701, refer to the descriptions in S601. Details are not described again.

S702: When the terminal does not detect a synchronization signal on a second carrier, the terminal sends data to the network device or receives data from the network device on the second carrier.

The first carrier and the second carrier are time-frequency synchronized. It may be understood that the terminal detects or establishes the time-frequency synchronization based on a synchronization signal on the first carrier and completes synchronization on the second carrier, and does not measure the synchronization signal on the second carrier. The terminal sends the data or receives the data on the second carrier when the synchronization on the second carrier is completed. For further descriptions of the second carrier, refer to the descriptions in S301. In this embodiment of this application, S702 may be understood as that the terminal does not establish time-frequency synchronization with the network device on the second carrier, but sends the data to the network device or receives the data from the network device on the second carrier based on the time-frequency synchronization established on the first carrier.

Correspondingly, when the network device does not establish time-frequency synchronization with the terminal on the second carrier, the network device receives the data from the terminal or sends the data to the terminal on the second carrier.

Based on the method shown in FIG. 7, after establishing the time-frequency synchronization on the first carrier, the terminal may not establish time-frequency synchronization with the network device on the second carrier, but send the data to the network device or receive the data from the network device on the second carrier based on the time-frequency synchronization established on the first carrier. This reduces measurement overheads and reduces power consumption of the terminal and the network device.

The actions of the terminal or the network device in S701 and S702 may be performed by the processor 201 in the communication apparatus 20 shown in FIG. 2 by invoking the application program code stored in the memory 203. This is not limited in this embodiment of this application.

FIG. 8 shows another communication method according to an embodiment of this application. The communication method includes S801 and S802.

S801: A terminal enters a first state on a first carrier.

For descriptions of the terminal and the first carrier, refer to corresponding descriptions in S301. The first state means that the terminal keeps in a time-frequency synchronization state with a network device.

In a possible implementation, the terminal detects at least one of a reference signal and control information on the first carrier. The reference signal includes a synchronization signal used for synchronization. Optionally, the reference signal may further include a reference signal used for channel measurement. The control information may be DCI that carries indication information, such as downlink scheduling information, uplink scheduling information, or slot indication information.

Correspondingly, the network device enters the first state on the first carrier.

S802: The terminal enters a second state on a second carrier.

The second state is a state in which the terminal and the network device can perform data transmission. For descriptions of the second carrier and the network device, refer to the descriptions in S301.

In a possible implementation, the terminal detects at least one of a reference signal and control information on the second carrier. The reference signal includes a reference signal used for channel measurement. In other words, the reference signal does not include a synchronization signal. The control information may be DCI that carries indication information, such as downlink scheduling information, uplink scheduling information, or slot indication information.

In a possible implementation, when performing S802, the terminal keeps detecting at least one of the synchronization signal and the control information on the first carrier, as described in S801.

Correspondingly, the network device enters the second state on the second carrier.

Based on the method shown in FIG. 8, after keeping in the time-frequency synchronization state with the network device on the first carrier, the terminal may keep in the time-frequency synchronization state with the network device on the second carrier, and perform data transmission with the network device in the time-frequency synchronization state. This reduces measurement overheads and reduces power consumption of the terminal and the network device.

The actions of the terminal or the network device in S801 and S802 may be performed by the processor 201 in the communication apparatus 20 shown in FIG. 2 by invoking the application program code stored in the memory 203. This is not limited in this embodiment of this application.

The foregoing mainly describes the solutions provided in embodiments of this application from a perspective of interaction between network elements. It may be understood that, to implement the foregoing functions, the terminal, the network device, or the like includes a corresponding hardware structure and/or software module for executing each function. A person skilled in the art should easily be aware that, in combination with units and algorithm operations of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be understood that the foregoing describes the interaction between the network elements by using only the terminal and the network device as an example. Actually, processing performed by the terminal is not limited to being performed by only a single network element, and processing performed by the network device is not limited to being performed by only a single network element. For example, the processing performed by the network device may be performed by at least one of a central unit (central unit, CU), a distributed unit (distributed unit, DU), and a remote unit (remote unit, RU).

In embodiments of this application, the terminal or the network device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

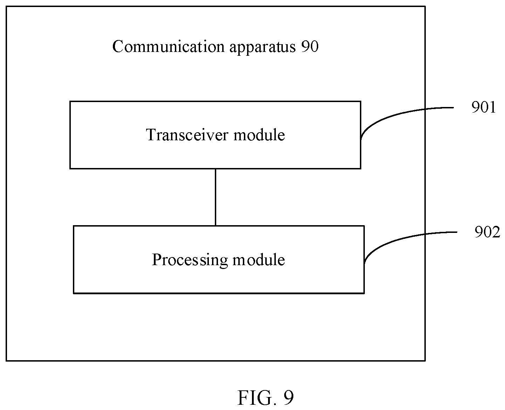

For example, when each functional module is obtained through division in an integrated manner, FIG. 9 is a schematic diagram of a structure of a communication apparatus 90. The communication apparatus 90 includes a transceiver module 901 and a processing module 902.

For example, the communication apparatus 90 is configured to implement functions of the terminal. The communication apparatus 90 is, for example, the terminal in the embodiment shown in FIG. 3, the embodiment shown in FIG. 4A, the embodiment shown in FIG. 5, the embodiment shown in FIG. 6, the embodiment shown in FIG. 7, or the embodiment shown in FIG. 8.

In this embodiment of this application, the communication apparatus 90 may be a terminal, or may be a chip used in the terminal, another combined device or component that has a function of the terminal, or the like. When the communication apparatus 90 is a terminal, the transceiver module 901 may be a transceiver, where the transceiver may include an antenna, a radio frequency circuit, and the like; and the processing module 902 may be a processor (or a processing circuit), for example, a baseband processor, where the baseband processor may include one or more CPUs. When the communication apparatus 90 is a component having a function of the terminal, the transceiver module 901 may be a radio frequency unit, and the processing module 902 may be a processor (or a processing circuit), for example, a baseband processor. When the communication apparatus 90 is a chip system, the transceiver module 901 may be an input/output interface of a chip (for example, a baseband chip), and the processing module 902 may be a processor (or a processing circuit) of the chip system, where the processor may include one or more central processing units. It should be understood that in this embodiment of this application, the transceiver module 901 may be implemented by a transceiver or a transceiver-related circuit component, and the processing module 902 may be implemented by a processor or a processor-related circuit component (or referred to as a processing circuit).

For example, the transceiver module 901 may be configured to perform all the sending and receiving operations performed by the terminal in the embodiment shown in FIG. 3, for example, S301, and/or configured to support another process of the technology described in this specification. The processing module 902 may be configured to perform all operations, other than the sending and receiving operations, performed by the terminal in the embodiment shown in FIG. 3, for example, S302, and/or configured to support another process of the technology described in this specification.

For another example, the transceiver module 901 may be configured to perform all the sending and receiving operations performed by the terminal in the embodiment shown in FIG. 4A, for example, S301 and S401, and/or configured to support another process of the technology described in this specification. The processing module 902 may be configured to perform all operations, other than the sending and receiving operations, performed by the terminal in the embodiment shown in FIG. 4A, for example, S302, and/or configured to support another process of the technology described in this specification.

For another example, the transceiver module 901 may be configured to perform all the sending and receiving operations performed by the terminal in the embodiment shown in FIG. 5, for example, S301 and S501, and/or configured to support another process of the technology described in this specification. The processing module 902 may be configured to perform all operations, other than the sending and receiving operations, performed by the terminal in the embodiment shown in FIG. 5, for example, S302, and/or configured to support another process of the technology described in this specification.

The transceiver module 901 is configured to send first information to a network device on a first carrier, where the first information is used to trigger measurement on at least one second carrier or at least one beam of at least one second carrier.

The processing module 902 is configured to send or receive a reference signal on the at least one second carrier or the at least one beam through the transceiver module 901.

In a possible implementation, the first carrier and the at least one second carrier belong to a same cell, the first carrier and the at least one second carrier are time-frequency synchronized, or the first carrier and the at least one second carrier are time-frequency synchronized and the first carrier and the at least one second carrier belong to a same cell.

In a possible implementation, the first carrier is used by the communication apparatus 90 and the network device to establish time-frequency synchronization, and the at least one second carrier is used by the communication apparatus 90 and the network device to perform data transmission.

In a possible implementation, the first information or a resource used to transmit the first information meets at least one of the following: The first information or the resource used to transmit the first information corresponds to the at least one second carrier; the first information or the resource used to transmit the first information corresponds to the at least one beam; the first information or the resource used to transmit the first information corresponds to a frequency band in which the second carrier is located; the first information or the resource used to transmit the first information corresponds to a level to which a size of a buffer status report of to-be-sent data belongs; and the first information or the resource used to transmit the first information corresponds to a service feature of to-be-sent data.

In a possible implementation, the transceiver module 901 is further configured to receive configuration information of the reference signal, where the configuration information of the reference signal indicates at least one of the following: at least one type of reference signal, a reference signal on the at least one second carrier, and at least one measurement time period of the reference signal.

In a possible implementation, the transceiver module 901 is further configured to receive first indication information, where the first indication information indicates that the configuration information of the reference signal takes effect. Alternatively, the transceiver module 901 is further configured to receive second indication information, where the second indication information indicates that the configuration information of the reference signal does not take effect.

In a possible implementation, the first indication information further indicates that a communication mode in which synchronization measurement is decoupled from data transmission is used.

In a possible implementation, the transceiver module 901 is further configured to send second information to the network device, where the second information indicates the communication apparatus 90 to stop sending or receiving the reference signal on the at least one second carrier or the at least one beam of the at least one second carrier. Alternatively, the transceiver module 901 is further configured to receive third information from the network device, where the third information indicates the communication apparatus 90 to stop sending or receiving the reference signal on the at least one second carrier or the at least one beam of the at least one second carrier.

In a possible implementation, the transceiver module 901 is further configured to receive configuration information of a timer from the network device. When the timer expires, the communication apparatus 90 stops sending or receiving the reference signal on the at least one second carrier or the at least one beam.

In a possible implementation, the transceiver module 901 is specifically configured to: when it is determined that there is to-be-sent data, send the first information to the network device on the first carrier. Alternatively, the transceiver module 901 is specifically configured to: when it is determined that there is an association relationship between the first carrier and the at least one second carrier, send the first information to the network device on the first carrier. Alternatively, the transceiver module 901 is specifically configured to: when a measurement reporting event is met, send the first information to the network device on the first carrier.

In a possible implementation, the transceiver module 901 is further configured to receive fourth information from the network device, where the fourth information indicates at least one of the following: the first carrier, the at least one second carrier, and the association relationship between the first carrier and the at least one second carrier, and the fourth information indicates that the communication mode in which synchronization measurement is decoupled from data transmission is used.

In a possible implementation, at least one item indicated by the fourth information is determined based on capability information of the communication apparatus 90.

In a possible implementation, the capability information of the communication apparatus 90 indicates at least one of the following: a frequency band supported by the communication apparatus 90, a quantity of carriers that can be used by the communication apparatus 90 in the frequency band supported by the communication apparatus 90, a moving speed of the communication apparatus 90, a location of the communication apparatus 90, and signal quality of the communication apparatus 90 on the first carrier.

In a possible implementation, the first carrier is located in a first frequency band, and the second carrier is located in a second frequency band, where the first frequency band is lower than the second frequency band. Alternatively, the first frequency band is located at a coverage layer, and the second frequency band is located at a data transmission layer.

In a possible implementation, the first information is a scheduling request, a buffer status report, or reporting information.

In a possible implementation, the reporting information includes at least one of the following: an identifier of the at least one second carrier, an identifier of the frequency band in which the at least one second carrier is located, and an index of the configuration information of the reference signal.

When the communication apparatus 90 is configured to implement the functions of the terminal, for other functions that can be implemented by the communication apparatus 90, refer to related descriptions in the embodiment shown in FIG. 3, the method embodiment shown in FIG. 4A, the embodiment shown in FIG. 5, the embodiment shown in FIG. 6, the embodiment shown in FIG. 7, or the embodiment shown in FIG. 8. Details are not described.

Alternatively, for example, the communication apparatus 90 is configured to implement functions of the network device. The communication apparatus 90 is, for example, the network device in the embodiment shown in FIG. 3, the method embodiment shown in FIG. 4A, the embodiment shown in FIG. 5, the embodiment shown in FIG. 6, the embodiment shown in FIG. 7, or the embodiment shown in FIG. 8.

In this embodiment of this application, the communication apparatus 90 may be a network device, or may be a chip used in the network device, another combined device or component that has a function of the network device, or the like. When the communication apparatus 90 is a network device, the transceiver module 901 may be a transceiver, where the transceiver may include an antenna, a radio frequency circuit, and the like; and the processing module 902 may be a processor (or a processing circuit), for example, a baseband processor, where the baseband processor may include one or more CPUs. When the communication apparatus 90 is a component having a function of the network device, the transceiver module 901 may be a radio frequency unit, and the processing module 902 may be a processor (or a processing circuit), for example, a baseband processor. When the communication apparatus 90 is a chip system, the transceiver module 901 may be an input/output interface of a chip (for example, a baseband chip), and the processing module 902 may be a processor (or a processing circuit) of the chip system, where the processor may include one or more central processing units. It should be understood that in this embodiment of this application, the transceiver module 901 may be implemented by a transceiver or a transceiver-related circuit component, and the processing module 902 may be implemented by a processor or a processor-related circuit component (or referred to as a processing circuit).

For example, the transceiver module 901 may be configured to perform all the sending and receiving operations performed by the network device in the embodiment shown in FIG. 3, for example, S301, and/or configured to support another process of the technology described in this specification. The processing module 902 may be configured to perform all operations, other than the sending and receiving operations, performed by the network device in the embodiment shown in FIG. 3, for example, S302, and/or configured to support another process of the technology described in this specification.

For another example, the transceiver module 901 may be configured to perform all the sending and receiving operations performed by the network device in the embodiment shown in FIG. 4A, for example, S301 and S401, and/or configured to support another process of the technology described in this specification. The processing module 902 may be configured to perform all operations, other than the sending and receiving operations, performed by the network device in the embodiment shown in FIG. 4A, for example, S302, and/or configured to support another process of the technology described in this specification.

For another example, the transceiver module 901 may be configured to perform all the sending and receiving operations performed by the network device in the embodiment shown in FIG. 5, for example, S301 and S501, and/or configured to support another process of the technology described in this specification. The processing module 902 may be configured to perform all operations, other than the sending and receiving operations, performed by the network device in the embodiment shown in FIG. 5, for example, S302, and/or configured to support another process of the technology described in this specification.

The transceiver module 901 is configured to receive first information from a terminal on a first carrier, where the first information is used to trigger measurement on at least one second carrier or at least one beam of at least one second carrier.

The processing module 902 is configured to receive or send a reference signal on the at least one second carrier or the at least one beam through the transceiver module 901.

In a possible implementation, the first carrier and the at least one second carrier belong to a same cell, the first carrier and the at least one second carrier are time-frequency synchronized, or the first carrier and the at least one second carrier are time-frequency synchronized and the first carrier and the at least one second carrier belong to a same cell.

In a possible implementation, the first carrier is used by the terminal and the communication apparatus 90 to establish time-frequency synchronization, and the at least one second carrier is used by the terminal and the communication apparatus 90 to perform data transmission.

In a possible implementation, the first information or a resource used to transmit the first information meets at least one of the following: The first information or the resource used to transmit the first information corresponds to the at least one second carrier; the first information or the resource used to transmit the first information corresponds to the at least one beam; the first information or the resource used to transmit the first information corresponds to a frequency band in which the second carrier is located; the first information or the resource used to transmit the first information corresponds to a level to which a size of a buffer status report of to-be-sent data belongs; and the first information or the resource used to transmit the first information corresponds to a service feature of to-be-sent data.

In a possible implementation, the transceiver module 901 is further configured to send configuration information of the reference signal, where the configuration information of the reference signal indicates at least one of the following: at least one type of reference signal, a reference signal on the at least one second carrier, and at least one measurement time period of the reference signal.

In a possible implementation, the transceiver module 901 is further configured to send first indication information, where the first indication information indicates that the configuration information of the reference signal takes effect. Alternatively, the transceiver module 901 is further configured to send second indication information, where the second indication information indicates that the configuration information of the reference signal does not take effect.

In a possible implementation, the first indication information further indicates that a communication mode in which synchronization measurement is decoupled from data transmission is used.

In a possible implementation, the transceiver module 901 is further configured to receive second information from the terminal, where the second information indicates the terminal to stop sending or receiving the reference signal on the at least one second carrier or the at least one beam of the at least one second carrier. Alternatively, the transceiver module 901 is further configured to send third information to the terminal, where the third information indicates the terminal to stop sending or receiving the reference signal on the at least one second carrier or the at least one beam of the at least one second carrier.

In a possible implementation, the transceiver module 901 is further configured to send configuration information of a timer to the terminal. When the timer expires, the communication apparatus 90 stops receiving or sending the reference signal on the at least one second carrier or the at least one beam.

In a possible implementation, the transceiver module 901 is specifically configured to: when it is determined that there is to-be-sent data, receive the first information from the terminal on the first carrier. Alternatively, the transceiver module 901 is specifically configured to: when it is determined that there is an association relationship between the first carrier and the at least one second carrier, receive the first information from the terminal on the first carrier. Alternatively, the transceiver module 901 is specifically configured to: when a measurement reporting event is met, receive the first information from the terminal on the first carrier.

In a possible implementation, the transceiver module 901 is further configured to send fourth information to the terminal, where the fourth information indicates at least one of the following: the first carrier, the at least one second carrier, and the association relationship between the first carrier and the at least one second carrier, and the fourth information indicates that the communication mode in which synchronization measurement is decoupled from data transmission is used.

In a possible implementation, at least one item indicated by the fourth information is determined based on capability information of the terminal.

In a possible implementation, the capability information of the terminal indicates at least one of the following: a frequency band supported by the terminal, a quantity of carriers that can be used by the terminal in the frequency band supported by the terminal, a moving speed of the terminal, location information of the terminal, and signal quality of the terminal on the first carrier.

In a possible implementation, the first carrier is located in a first frequency band, and the second carrier is located in a second frequency band, where the first frequency band is lower than the second frequency band. Alternatively, the first frequency band is located at a coverage layer, and the second frequency band is located at a data transmission layer.

In a possible implementation, the first information is a scheduling request, a buffer status report, or reporting information.

In a possible implementation, the reporting information includes at least one of the following: an identifier of the at least one second carrier, an identifier of the frequency band in which the at least one second carrier is located, and an index of the configuration information of the reference signal.

When the communication apparatus 90 is configured to implement the functions of the network device, for other functions that can be implemented by the communication apparatus 90, refer to related descriptions in the embodiment shown in FIG. 3, the method embodiment shown in FIG. 4A, the embodiment shown in FIG. 5, the embodiment shown in FIG. 6, the embodiment shown in FIG. 7, or the embodiment shown in FIG. 8. Details are not described.

In a simple embodiment, a person skilled in the art may figure out that the communication apparatus 90 may be in the form shown in FIG. 2. For example, the processor 201 in FIG. 2 may invoke the computer-executable instructions stored in the memory 203, to enable the communication apparatus 90 to perform the method in the foregoing method embodiments.

For example, functions/implementation processes of the transceiver module 901 and the processing module 902 in FIG. 9 may be implemented by the processor 201 in FIG. 2 by invoking the computer-executable instructions stored in the memory 203. Alternatively, a function/an implementation process of the processing module 902 in FIG. 9 may be implemented by the processor 201 in FIG. 2 by invoking the computer-executable instructions stored in the memory 203, and a function/an implementation process of the transceiver module 901 in FIG. 9 may be implemented by the communication interface 204 in FIG. 2.

The foregoing descriptions of the implementations allow a person skilled in the art to clearly understand that, for the purpose of convenient and brief description, division into the functional modules is merely used as an example for description. During actual application, the foregoing functions may be allocated to different functional modules for implementation as required. In other words, an inner structure of the apparatus is divided into different functional modules to implement all or some of the functions described above.

In several embodiments provided in this application, it should be understood that the disclosed apparatus and method may be implemented in other manners. For example, the described apparatus embodiments are merely examples. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may be one or more physical units, that is, may be located in one place, or may be distributed to a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, or the part contributing to the current technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
sending, by a terminal, first information to a network device on a first carrier, wherein the first information is used to trigger measurement on at least one second carrier or at least one beam of at least one second carrier; and
sending or receiving, by the terminal, a reference signal on the at least one second carrier or the at least one beam.

2. The method according to claim 1, wherein the first carrier and the at least one second carrier belong to a same cell, the first carrier and the at least one second carrier are time-frequency synchronized, or the first carrier and the at least one second carrier are time-frequency synchronized and the first carrier and the at least one second carrier belong to a same cell.

3. The method according to claim 1 or 2, wherein the first carrier is used by the terminal and the network device to establish time-frequency synchronization, and the at least one second carrier is used by the terminal and the network device to perform data transmission.

4. The method according to any one of claims 1 to 3, wherein the first information or a resource used to transmit the first information meets at least one of the following:
the first information or the resource used to transmit the first information corresponds to the at least one second carrier;
the first information or the resource used to transmit the first information corresponds to the at least one beam;
the first information or the resource used to transmit the first information corresponds to a frequency band in which the second carrier is located;
the first information or the resource used to transmit the first information corresponds to a level to which a size of a buffer status report of to-be-sent data belongs; and
the first information or the resource used to transmit the first information corresponds to a service feature of to-be-sent data.

5. The method according to any one of claims 1 to 4, wherein the method further comprises:
receiving, by the terminal, configuration information of the reference signal, wherein the configuration information of the reference signal indicates at least one of the following: at least one type of reference signal, a reference signal on the at least one second carrier, and at least one measurement time period of the reference signal.

6. The method according to claim 5, wherein the method further comprises:
receiving, by the terminal, first indication information, wherein the first indication information indicates that the configuration information of the reference signal takes effect; or
receiving, by the terminal, second indication information, wherein the second indication information indicates that the configuration information of the reference signal does not take effect.

7. The method according to claim 6, wherein the first indication information further indicates that a communication mode in which synchronization measurement is decoupled from data transmission is used.

8. The method according to any one of claims 1 to 7, wherein the method further comprises:
sending, by the terminal, second information to the network device, wherein the second information indicates the terminal to stop sending or receiving the reference signal on the at least one second carrier or the at least one beam of the at least one second carrier; or
receiving, by the terminal, third information from the network device, wherein the third information indicates the terminal to stop sending or receiving the reference signal on the at least one second carrier or the at least one beam of the at least one second carrier.

9. The method according to any one of claims 1 to 8, wherein the method further comprises:
receiving, by the terminal, configuration information of a timer from the network device; and when the timer expires, stopping, by the terminal, sending or receiving the reference signal on the at least one second carrier or the at least one beam.

10. The method according to any one of claims 1 to 9, wherein the sending, by a terminal, first information to a network device on a first carrier comprises:
when it is determined that there is to-be-sent data, sending, by the terminal, the first information to the network device on the first carrier;
when it is determined that there is an association relationship between the first carrier and the at least one second carrier, sending, by the terminal, the first information to the network device on the first carrier; or
when a measurement reporting event is met, sending, by the terminal, the first information to the network device on the first carrier.

11. The method according to any one of claims 1 to 10, wherein the method further comprises:
receiving, by the terminal, fourth information from the network device, wherein the fourth information indicates at least one of the following: the first carrier, the at least one second carrier, and the association relationship between the first carrier and the at least one second carrier, and the fourth information indicates that the communication mode in which synchronization measurement is decoupled from data transmission is used.

12. The method according to any one of claims 1 to 11, wherein the first information is a scheduling request, a buffer status report, or reporting information.

13. A communication method, wherein the method comprises:
receiving, by a network device, first information from a terminal on a first carrier, wherein the first information is used to trigger measurement on at least one second carrier or at least one beam of at least one second carrier; and
receiving or sending, by the network device, a reference signal on the at least one second carrier or the at least one beam.

14. The method according to claim 13, wherein the first carrier and the at least one second carrier belong to a same cell, the first carrier and the at least one second carrier are time-frequency synchronized, or the first carrier and the at least one second carrier are time-frequency synchronized and the first carrier and the at least one second carrier belong to a same cell.

15. The method according to claim 13 or 14, wherein the first carrier is used by the terminal and the network device to establish time-frequency synchronization, and the at least one second carrier is used by the terminal and the network device to perform data transmission.

16. The method according to any one of claims 13 to 15, wherein the first information or a resource used to transmit the first information meets at least one of the following:
the first information or the resource used to transmit the first information corresponds to the at least one second carrier;
the first information or the resource used to transmit the first information corresponds to the at least one beam;
the first information or the resource used to transmit the first information corresponds to a frequency band in which the second carrier is located;
the first information or the resource used to transmit the first information corresponds to a level to which a size of a buffer status report of to-be-sent data belongs; and
the first information or the resource used to transmit the first information corresponds to a service feature of to-be-sent data.

17. The method according to any one of claims 13 to 16, wherein the method further comprises:
sending, by the network device, configuration information of the reference signal, wherein the configuration information of the reference signal indicates at least one of the following: at least one type of reference signal, a reference signal on the at least one second carrier, and at least one measurement time period of the reference signal.

18. The method according to claim 17, wherein the method further comprises:
sending, by the network device, first indication information, wherein the first indication information indicates that the configuration information of the reference signal takes effect; or
sending, by the network device, second indication information, wherein the second indication information indicates that the configuration information of the reference signal does not take effect.

19. The method according to claim 18, wherein the first indication information further indicates that a communication mode in which synchronization measurement is decoupled from data transmission is used.

20. The method according to any one of claims 13 to 19, wherein the method further comprises:
receiving, by the network device, second information from the terminal, wherein the second information indicates the terminal to stop sending or receiving the reference signal on the at least one second carrier or the at least one beam of the at least one second carrier; or
sending, by the network device, third information to the terminal, wherein the third information indicates the terminal to stop sending or receiving the reference signal on the at least one second carrier or the at least one beam of the at least one second carrier.

21. The method according to any one of claims 13 to 20, wherein the method further comprises:
sending, by the network device, configuration information of a timer to the terminal; and when the timer expires, stopping, by the network device, receiving or sending the reference signal on the at least one second carrier or the at least one beam.

22. The method according to any one of claims 13 to 21, wherein the receiving, by a network device, first information from a terminal on a first carrier comprises:
when it is determined that there is to-be-sent data, receiving, by the network device, the first information from the terminal on the first carrier;
when it is determined that there is an association relationship between the first carrier and the at least one second carrier, receiving, by the network device, the first information from the terminal on the first carrier; or
when a measurement reporting event is met, receiving, by the network device, the first information from the terminal on the first carrier.

23. The method according to any one of claims 13 to 22, wherein the method further comprises:
sending, by the network device, fourth information to the terminal, wherein the fourth information indicates at least one of the following: the first carrier, the at least one second carrier, and the association relationship between the first carrier and the at least one second carrier, and the fourth information indicates that the communication mode in which synchronization measurement is decoupled from data transmission is used.

24. The method according to any one of claims 13 to 23, wherein the first information is a scheduling request, a buffer status report, or reporting information.

25. A communication apparatus, wherein the communication apparatus comprises a transceiver module and a processing module;
the transceiver module is configured to send first information to a network device on a first carrier, wherein the first information is used to trigger measurement on at least one second carrier or at least one beam of at least one second carrier; and
the processing module is configured to send or receive a reference signal on the at least one second carrier or the at least one beam through the transceiver module.

26. The communication apparatus according to claim 25, wherein the first carrier and the at least one second carrier belong to a same cell, the first carrier and the at least one second carrier are time-frequency synchronized, or the first carrier and the at least one second carrier are time-frequency synchronized and the first carrier and the at least one second carrier belong to a same cell.

27. The communication apparatus according to claim 25 or 26, wherein the first carrier is used by the communication apparatus and the network device to establish time-frequency synchronization, and the at least one second carrier is used by the communication apparatus and the network device to perform data transmission.

28. A communication apparatus, wherein the communication apparatus comprises a transceiver module and a processing module;
the transceiver module is configured to receive first information from a terminal on a first carrier, wherein the first information is used to trigger measurement on at least one second carrier or at least one beam of at least one second carrier; and
the processing module is configured to receive or send a reference signal on the at least one second carrier or the at least one beam through the transceiver module.

29. The communication apparatus according to claim 28, wherein the first carrier and the at least one second carrier belong to a same cell, the first carrier and the at least one second carrier are time-frequency synchronized, or the first carrier and the at least one second carrier are time-frequency synchronized and the first carrier and the at least one second carrier belong to a same cell.

30. The communication apparatus according to claim 28 or 29, wherein the first carrier is used by the terminal and the communication apparatus to establish time-frequency synchronization, and the at least one second carrier is used by the terminal and the communication apparatus to perform data transmission.

31. A communication apparatus, comprising a processor, wherein the processor is coupled to a memory, and the memory is configured to store a program or instructions; and when the program or the instructions are executed by the processor, the apparatus is enabled to perform the method according to any one of claims 1 to 12 or the method according to any one of claims 13 to 24.

32. A computer-readable medium, wherein the computer-readable medium stores a computer program or instructions; and when the computer program or the instructions are executed, a computer is enabled to perform the method according to any one of claims 1 to 12 or the method according to any one of claims 13 to 24.

33. A computer program product, wherein the computer program product comprises a computer program; and when the computer program is run by a computer, the computer is enabled to perform the method according to any one of claims 1 to 12 or the method according to any one of claims 13 to 24.
